(19) 
**Europäisches Patentamt**
**European Patent Office**
**Office européen des brevets**

(11) **EP 4 432 746 A1**

(12) **EUROPEAN PATENT APPLICATION**
published in accordance with Art. 153(4) EPC

(43) Date of publication:
**18.09.2024 Bulletin 2024/38**

(21) Application number: **22893295.0**

(22) Date of filing: **14.11.2022**

(51) International Patent Classification (IPC):
**H04W 72/00** (2023.01)    **H04W 72/04** (2023.01)
**H04W 72/12** (2023.01)    **H04L 1/18** (2023.01)

(52) Cooperative Patent Classification (CPC):
**H04L 1/18; H04W 72/00; H04W 72/04; H04W 72/12**

(86) International application number:
**PCT/KR2022/017836**

(87) International publication number:
**WO 2023/085876 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021 KR 20210156034**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING/RECEIVING GROUP COMMON PDSCH IN WIRELESS COMMUNICATION SYSTEM**

(57) A method and a device for transmitting/receiving a group common PDSCH in a wireless communication system are disclosed. A method for receiving a group common PDSCH according to an embodiment of the present disclosure may comprise the steps of: receiving, from a base station, N reference signals (where N is a natural number); receiving, from the base station, one or more downlink SPS configurations for group common transmission; and receiving, from the base station, M group common PDSCHs (where M is a natural number) scheduled using the one or more SPS configurations.

**FIG.17**

Transmit N reference signals — S1701

Receive one or more downlink SPS configuration for group common transmission — S1702

Receive M group common PDSCHs scheduled using one or more SPS configuration — S1703

EP 4 432 746 A1

**Description**

[Technical Field]

The present disclosure relates to a wireless communication system, and in more detail, relates to a method and an apparatus of transmitting and receiving a group common physical downlink shared channel (PDSCH) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving a group common (multicast or broadcast) physical downlink control channel (PDCCH)/physical downlink shared channel (PDSCH).

In addition, a technical object of the present disclosure is to provide a method and an apparatus for configuring quasi co-location (QCL) for group common PDCCH/PDSCH transmission according to semi-persistent scheduling (SPS).

The technical objects to be achieved by the present disclosure are not limited to the above-described technical objects, and other technical objects which are not described herein will be clearly understood by those skilled in the pertinent art from the following description.

[Technical Solution]

A method of receiving a group common PDSCH (physical downlink shared channel) in a wireless communication system according to an aspect of the present disclosure may include: receiving, from a base station, N (N is a natural number) reference signals; receiving, from the base station, one or more downlink semi-persistent scheduling (SPS) configurations for group common transmission; and receiving, from the base station, M (M is a natural number) group common PDSCHs scheduled using the one or more SPS configurations. For assuming a quasi co-location (QCL) relationship for receiving the M group common PDSCHs, different group common PDSCHs in the M group common PDSCHs may be mapped to different reference signals in the N reference signals.

A method of transmitting a group common PDSCH (physical downlink shared channel) in a wireless communication system according to an additional aspect of the present disclosure may include: transmitting, to a terminal, N (N is a natural number) reference signals; transmitting, to the terminal, one or more downlink semi-persistent scheduling (SPS) configurations for group common transmission; and transmitting, to the terminal, M (M is a natural number) group common PDSCHs scheduled using the one or more SPS configurations. For assuming a quasi co-location (QCL) relationship for receiving the M group common PDSCHs, different group common PDSCHs in the M group common PDSCHs may be mapped to different reference signals in the N reference signals.

[Technical Effects]

According to an embodiment of the present disclosure, a group common PDSCH according to SPS can be transmitted (i.e., providing a group common service) to terminals in an inactive/idle state in multiple cells.

In addition, according to an embodiment of the present disclosure, by configuring a QCL for a group common PDSCH, the group common PDSCH according to SPS can be smoothly transmitted to multiple terminals in multiple cells (i.e., providing a group common service).

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates an SSB structure in a wireless communication system to which the present disclosure can be applied.

FIG. 8 illustrates SSB transmission in a wireless communication system to which this disclosure can be applied.

FIG. 9 illustrates downlink time synchronization information in a wireless communication system to which the present disclosure can be applied.

FIG. 10 illustrates a system information acquisition process.

FIG. 11 illustrates multi-beam transmission of an SSB in a wireless communication system to which this disclosure can be applied.

FIG. 12 illustrates an indication of an SSB actually transmitted in a wireless communication system to which the present disclosure can be applied.

FIG. 13 illustrates a HARQ-ACK transmission and reception procedure for a multicast PDSCH according to an embodiment of the present disclosure.

FIG. 14 illustrates that an RBG or RB bundle for multicast is defined relative to a common resource block in a wireless communication system to which the present disclosure can be applied.

FIG. 15 illustrates group common PDCCH/PDSCH transmission and HARQ-ACK transmission in a wireless communication system to which the present disclosure can be applied.

FIG. 16 is a diagram illustrating a signaling procedure between a base station and a terminal for a group common PDSCH transmission and reception method according to an embodiment of the present disclosure.

FIG. 17 is a diagram illustrating an operation of a terminal for a group common PDSCH transmission and reception method according to an embodiment of the present disclosure.

FIG. 18 is a diagram illustrating an operation of a base station for a group common PDSCH transmission and reception method according to an embodiment of the present disclosure.

FIG. 19 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

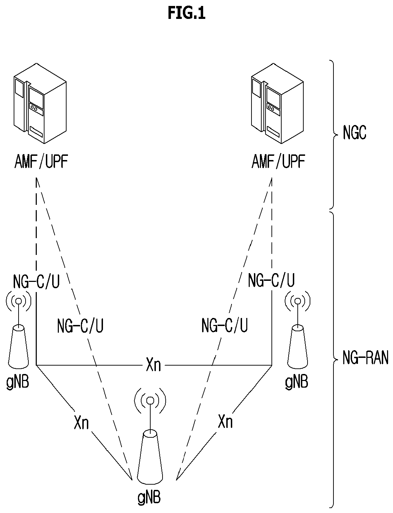

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

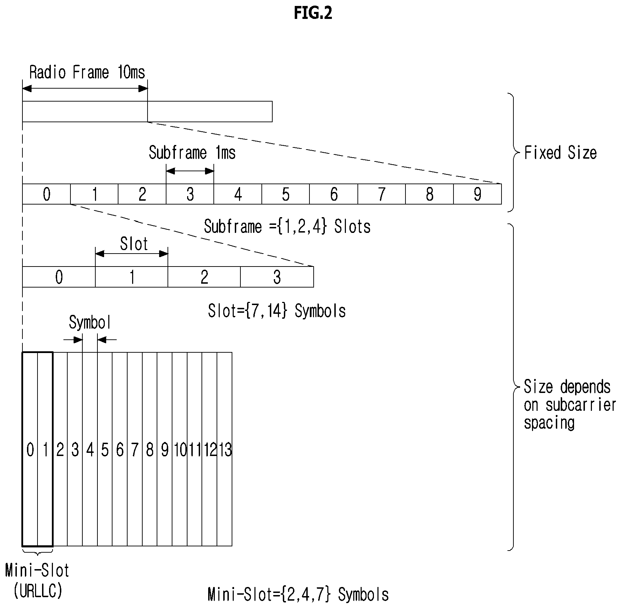

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is 480-103 Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,...,N_{slot}^{subframe,\mu}-1\}$ in a subframe and are numbered in an increasing order of $n_{s,f}^{\mu}\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |

(continued)

| μ | $N_{symb}^{slot}$ | $N_{slot}^{frame,\mu}$ | $N_{slot}^{subframe,\mu}$ |
|---|---|---|---|
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

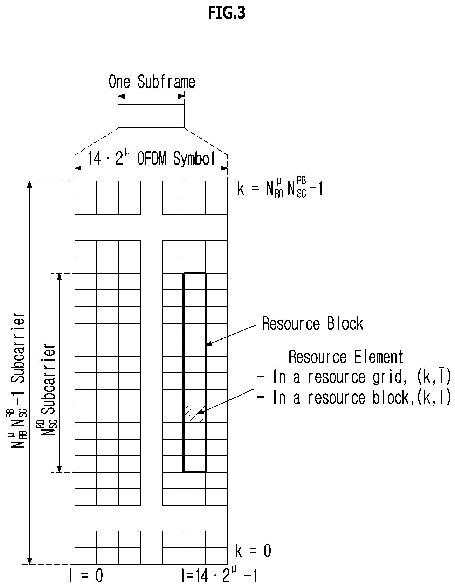

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

7

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

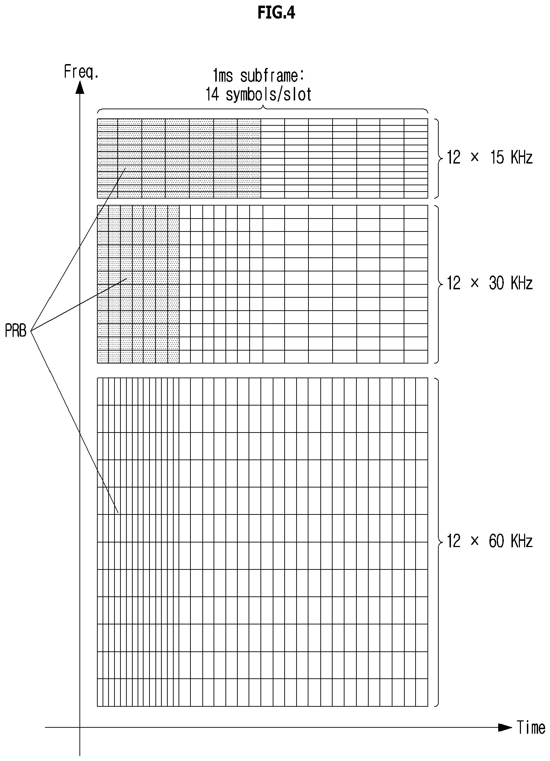

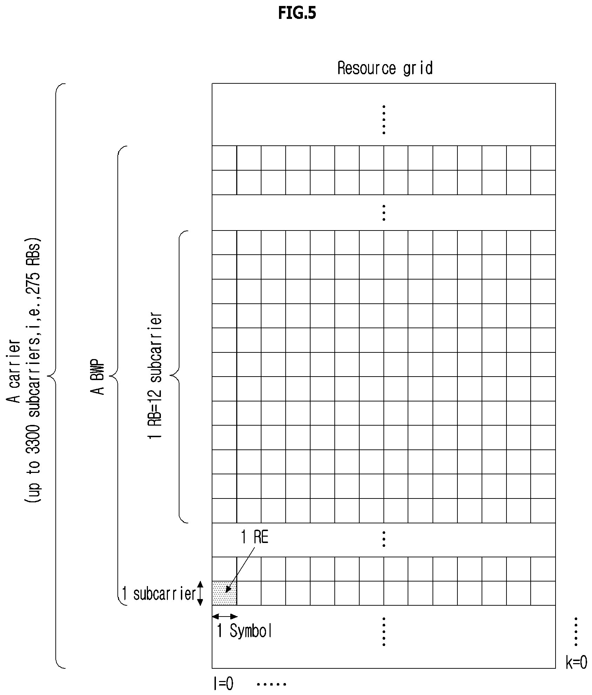

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

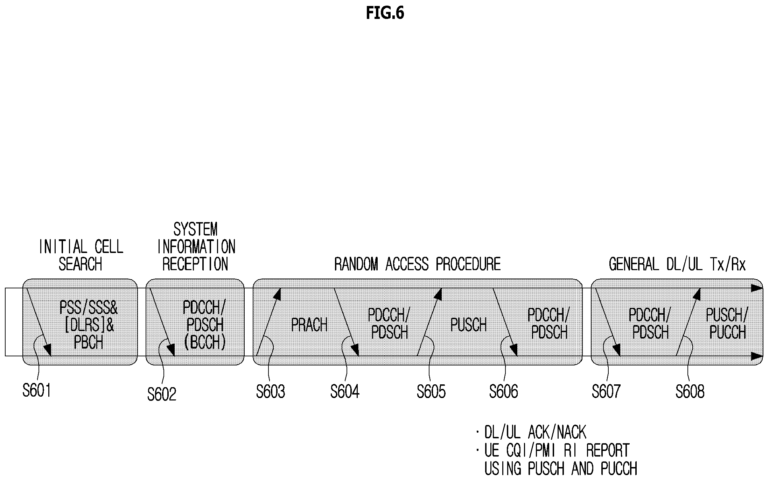

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Schedulinq of a PUSCH in one cell |
| 0_1 | Scheduling of one or multiple PUSCHs in one cell, or indication of cell group downlink feedback information to a UE |
| 0_2 | Schedulinq of a PUSCH in one cell |
| 1_0 | Schedulinq of a PDSCH in one DL cell |
| 1_1 | Schedulinq of a PDSCH in one cell |
| 1_2 | Schedulinq of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Synchronization signal block (SSB) transmission and related operations

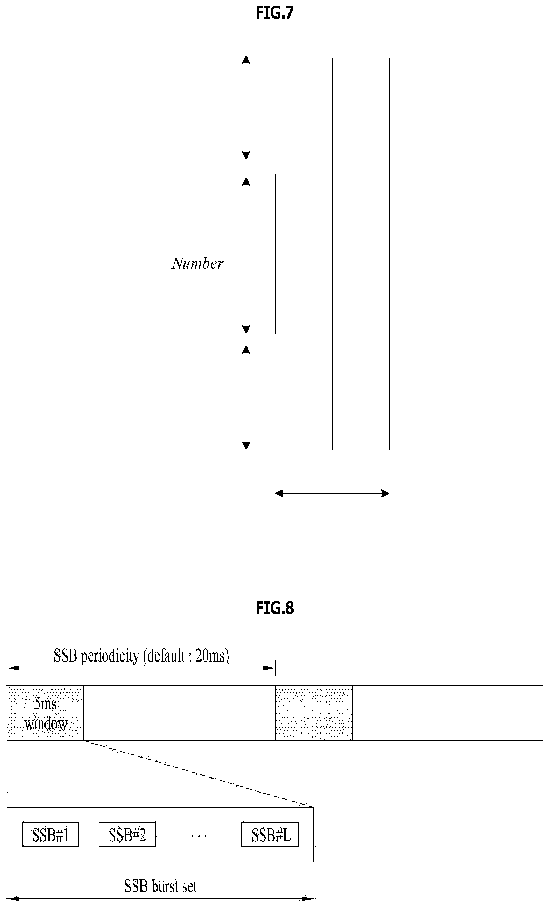

FIG. 7 illustrates an SSB structure in a wireless communication system to which the present disclosure can be applied.

A terminal can perform cell search, system information acquisition, beam alignment for initial access, DL measurement, etc. based on an SSB. In this disclosure, an SSB may be used in the same sense as an SS/PBCH (Synchronization Signal/Physical Broadcast channel) block.

Referring to FIG. 7, an SSB is composed of a primary synchronization signal (PSS), a secondary synchronization signal (SSS), and a physical broadcast channel (PBCH). An SSB is composed of four consecutive OFDM symbols, and a PSS, a PBCH, an SSS/PBCH, and a PBCH are transmitted for each OFDM symbol. A PSS and an SSS each is composed of 1 OFDM symbol and 127 subcarriers, and a PBCH is composed of 3 OFDM symbols and 576 subcarriers. Polar coding and QPSK (Quadrature Phase Shift Keying) are applied to a PBCH. A PBCH is composed of a data resource element (RE) and a demodulation reference signal (DMRS) RE for each OFDM symbol. There are three DMRS REs for each resource block (RB), and three data REs exist between DMRS REs.

Hereinafter, cell search will be described.

Cell search refers to a process in which a terminal acquires time/frequency synchronization of a cell and detects a cell identifier (ID) (e.g., physical layer cell identifier (PCID)) of the cell. A PSS is used to detect a cell ID within a cell ID group, and an SSS is used to detect a cell ID group. A PBCH is used for SSB (time) index detection and half-frame detection.

A cell search process of a terminal can be summarized as Table 6 below.

[Table 6]

|  | Type of signal | Operation |
|---|---|---|
| Step 1 | PSS | * Acquire SSB symbol timing<br>* Detect Cell ID within Cell ID group (3 hypotheses) |
| Step 2 | SSS | * Cell ID group detection (336 hypotheses) |
| Step 3 | PBCH DMRS | * SSB index and half frame (HF) index (Slot and frame border detection) |
| Step 4 | PBCH | * Time information (80 ms, System Frame Number (SFN), SSB index, half frame (HF))<br>* Remaining Minimum System Information (RMSI) control resource set (CORESET)/search space configurations |
| Step 5 | PDCCH and PDSCH | * Cell access information<br>* RACH(random access channel) configuration |

There are 336 cell ID groups, and 3 cell IDs exist for each cell ID group. There are a total of 1008 cell IDs, and the cell ID can be defined by Equation 3.

【Equation 3】

$$N_{\mathrm{ID}}^{\mathrm{cell}} = 3N_{\mathrm{ID}}^{(1)} + N_{\mathrm{ID}}^{(2)} \qquad \text{where} \quad N_{\mathrm{ID}}^{(1)} \in \{0,1,...,335\} \quad \text{and} \quad N_{\mathrm{ID}}^{(2)} \in \{0,1,2\}$$

Here, $N_{\mathrm{ID}}^{\mathrm{cell}}$ represents a cell ID (e.g., PCID). $N_{\mathrm{ID}}^{(1)}$ represents a cell ID group and is provided/obtained through an SSS. $N_{\mathrm{ID}}^{(2)}$ represents a cell ID within a cell ID group and is provided/obtained through a PSS.

A PSS sequence $d_{\mathrm{PSS}}(n)$ can be defined to satisfy Equation 4.

【Equation 4】

$$d_{\mathrm{PSS}}(n) = 1 - 2x(m)$$
$$m = \left(n + 43N_{\mathrm{ID}}^{(2)}\right)\mathrm{mod}\,127$$
$$0 \leq n < 127$$

Here, x(i+7)=(x(i+4)+x(i))mod2, and [x(6) x(5) x(4) x(3) x(2) x(1) x(0)]=[1 1 1 0 1 1 0].

An SSS sequence dSSS(n) can be defined to satisfy Equation 5.

【Equation 5】

$$d_{SSS}(n) = \left[1 - 2x_0\left((n+m_0)\bmod 127\right)\right]\left[1 - 2x_1\left((n+m_1)\bmod 127\right)\right]$$

$$m_0 = 15\left\lfloor\frac{N_{ID}^{(1)}}{112}\right\rfloor + 5N_{ID}^{(2)}$$

$$m_1 = N_{ID}^{(1)} \bmod 112$$

$$0 \le n < 127$$

Here, $x_0(i+7)=(x_0(i+4)+x_0(i))\bmod 2$, $x_1(i+7)=(x_1(i+4)+x_1(i))\bmod 2$, and $[x_0(6)\ x_0(5)\ x_0(4)\ x_0(3)\ x_0(2)\ x_0(1)\ x_0(0)]=[0\ 0\ 0\ 0\ 0\ 0\ 1]$, $[x_1(6)\ x_1(5)\ x_1(4)\ x_1(3)\ x_1(2)\ x_1(1)\ x_1(0)]=[0\ 0\ 0\ 0\ 0\ 0\ 1]$.

FIG. 8 illustrates SSB transmission in a wireless communication system to which this disclosure can be applied.

An SSB is transmitted periodically according to an SSB period. A basic SSB period assumed by a terminal during initial cell search is defined as 20ms. After cell access, an SSB period may be configured to one of {5ms, 10ms, 20ms, 40ms, 80ms, 160ms} by a network (e.g., base station). At a beginning of an SSB cycle, a set of SSB bursts is configured. An SSB burst set is composed of a 5ms time window (i.e. half-frame), and an SSB can be transmitted up to L times within an SS burst set. The maximum transmission number L of an SSB can be given as follows depending on a frequency band of a carrier. One slot includes up to 2 SSBs.

- For frequency range up to 3 GHz, L = 4
- For frequency range from 3 GHz to 6 GHz, L = 8
- For frequency range from 6 GHz to 52.6 GHz, L = 64

Time locations of SSB candidates within an SS burst set can be defined according to an SCS as follows. Time locations of SSB candidates are indexed from 0 to L-1 according to temporal order within an SSB burst set (i.e., half-frame) (SSB index).

- Case A - 15 kHz SCS: An index of a start symbol of an SSB candidate is given as {2, 8} + 14*n. If a carrier frequency is 3 GHz or less, n=0, 1. If a carrier frequency is 3 GHz to 6 GHz, n=0, 1, 2, 3.
- Case B - 30 kHz SCS: An index of a start symbol of an SSB candidate is given as {4, 8, 16, 20} + 28*n. If a carrier frequency is 3 GHz or less, n=0. If a carrier frequency is 3 GHz to 6 GHz, n=0, 1.
- Case C - 30 kHz SCS: An index of a start symbol of an SSB candidate is given as {2, 8} + 14*n. If a carrier frequency is 3 GHz or less, n=0, 1. If a carrier frequency is 3 GHz to 6 GHz, n=0, 1, 2, 3.
- Case D - 120 kHz SCS: An index of a start symbol of an SSB candidate is given as {4, 8, 16, 20} + 28*n. For carrier frequencies greater than 6 GHz, n=0, 1, 2, 3, 5, 6, 7, 8, 10, 11, 12, 13, 15, 16, 17, 18.
- Case E - 240 kHz SCS: An index of a start symbol of an SSB candidate is given as {8, 12, 16, 20, 32, 36, 40, 44} + 56*n. If a carrier frequency is greater than 6 GHz, n=0, 1, 2, 3, 5, 6, 7, 8.

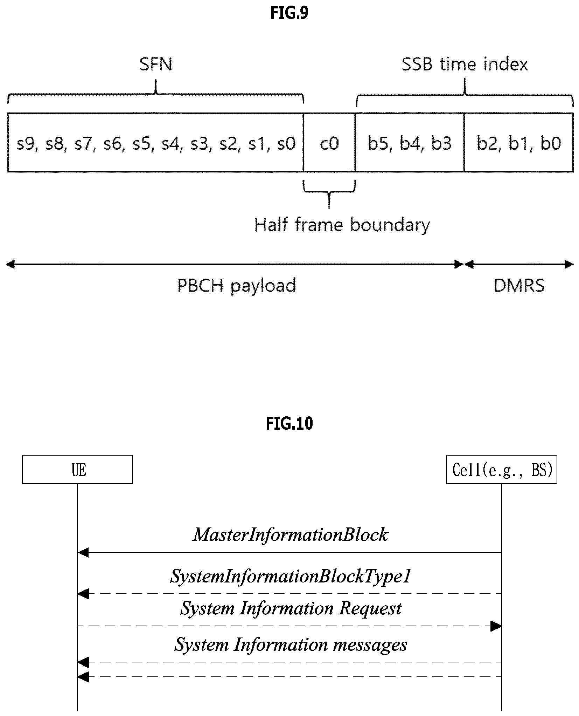

FIG. 9 illustrates downlink time synchronization information in a wireless communication system to which the present disclosure can be applied.

A terminal can obtain downlink (DL) synchronization by detecting an SSB. A terminal can identify a structure of an SSB burst set based on the detected SSB index and detect symbol/slot/half-frame boundaries accordingly. A number of a frame/half-frame to which the detected SSB belongs can be identified using SFN information and half-frame indication information.

Specifically, a terminal can obtain 10-bit SFN (System Frame Number) information from a PBCH (s0 to s9). Of the 10-bit SFN information, 6 bits are obtained from the MIB (Master Information Block), and the remaining 4 bits are obtained from the PBCH TB (Transport Block). For the 10-bit SFN information, 6 bits are obtained from MIB (Master Information Block), and the remaining 4 bits are obtained from a PBCH TB (Transport Block).

Next, a terminal can obtain 1-bit half-frame indication information (c0). When a carrier frequency is 3 GHz or less, half-frame indication information can be signaled implicitly using a PBCH DMRS. A PBCH DMRS indicates 3 bits of information by using one of 8 PBCH DMRS sequences. Therefore, in the case of L = 4, among the 3 bits that can be indicated using 8 PBCH DMRS sequences, 1 bit remaining after indicating an SSB index can be used for half-frame indication.

Finally, a terminal can obtain an SSB index based on a DMRS sequence and a PBCH payload. SSB candidates are indexed from 0 to L-1 according to time order within an SSB burst set (i.e., half-frame). When L = 8 or 64, the LSB (Least Significant Bit) 3 bits of an SSB index can be indicated using 8 different PBCH DMRS sequences (b0 to b2). When L = 64, 3 bits of the MSB (Most Significant Bit) of an SSB index are indicated through the PBCH (b3 to b5). When L = 2, the LSB 2 bits of an SSB index can be indicated using four different PBCH DMRS sequences (b0, b1). When L = 4, among the 3 bits that can be indicated using 8 PBCH DMRS sequences, the 1 bit remaining after indicating an SSB index can be used for half-frame indication (b2).

Hereinafter, acquisition of system information will be described.

FIG. 10 illustrates a system information acquisition process.

A UE may obtain access stratum (AS)/non-access stratum (NAS) information through a system information (SI) acquisition process. A SI acquisition process may be applied to a UE in an RRC idle (RRC_IDLE) state, an RRC inactive (RRC_INACTIVE) state, and an RRC connected (RRC_CONNECTED) state.

SI is divided into a master information block (MIB) and a plurality of system information blocks (SIB). SI other than an MIB may be referred to as Remaining Minimum System Information (RMSI) and Other System Information (OSI). RMSI corresponds to SIB1, and OSI refers to SIBs other than SIB2 and higher than SIB2. For details, the following may be referenced.

An MIB includes information/parameters related to SIB1 (SystemInformationBlockType1) reception and is transmitted through a PBCH of an SSB (SS/PBCH block). MIB information may include fields shown in Table 7.

Table 7 illustrates a portion of an MIB.

【Table 7】

| |
|---|
| - subCarrierSpacingCommon                ENUMERATED {scs15or60, scs30or120}, |
| - ssb-SubcarrierOffset                INTEGER (0..15), |
| - pdcch-ConfigSIB1                INTEGER (0..255), |

Table 8 illustrates a description of MIB fields illustrated in Table 7.

[Table 8]

| |
|---|
| pdcch-ConfigSIB1<br>The field pdcch-ConfigSIB1 determines a common ControlResourceSet (CORESET), a common search space and necessary PDCCH parameters.<br>If the field ssb-SubcarrierOffset indicates that SIB1 is absent, the field pdcch-ConfigSIB1 indicates the frequency positions where the UE may find SS/PBCH block with SIB1 or the frequency range where the network does not provide SS/PBCH block with SIB1 |
| ssb-SubcarrierOffset.<br>The field ssb-SubcarrierOffset corresponds to k SSB, which is the frequency domain offset (number of subcarriers) between SSB and the overall resource block grid.<br>The value range of the field ssb-SubcarrierOffset may be extended by an additional most significant bit encoded within PBCH.<br>The field ssb-SubcarrierOffset may indicate that this cell does not provide SIB1 and that there is hence no CORESET#0 configured in MIB. In this case, the field pdcch-ConfigSIB1 may indicate the frequency positions where the UE may (not) find a SS/PBCH with a control resource set and search space for SIB1. |

subCarrierSpacingCommon

The field subCarrierSpacingCommon indicates subcarrier spacing for SIB1, Msg.2/4 and MsgB for initial access, paging and broadcast SI-messages. If the UE acquires this MIB on an FR1 carrier frequency, the value scs15or60 corresponds to 15 kHz and the value scs30or120 corresponds to 30 kHz. If the UE acquires this MIB on an FR2 carrier frequency, the value scs15or60 corresponds to 60 kHz and the value scs30or120 corresponds to 120 kHz.

Upon initial cell selection, a UE assumes that half-frames with an SSB are repeated in a period of 20 ms. A UE may check whether a Control Resource Set (CORESET) exists for the TypeO-PDCCH common search space based on an MIB. The TypeO-PDCCH common search space is a type of PDCCH search space and is used to transmit a PDCCH for scheduling an SI message. When the TypeO-PDCCH common search space exists, a UE may determine (i) a plurality of contiguous RBs and one or more contiguous symbols constituting a CORESET and (ii) a PDCCH occasion (i.e., time domain location for PDCCH reception) based on information in an MIB (e.g., pdcch-ConfigSIB1). Specifically, pdcch-ConfigSIB1 is 8-bit information, (i) is determined based on 4 bits of MSB (Most Significant Bit) (refer to 3GPP TS 38.213 Table 13-1~13-10), and (ii) is determined based on 4 bits of LSB (Least Significant Bit) (refer to 3GPP TS 38.213 Table 13-11~13-15).

As an example, information indicated by MSB 4 bits of pdcch-ConfigSIB1 is exemplified as follows.

A configuration of a CORESET for the TypeO-PDCCH common search space is:

i) Define multiple tables according to subcarrier spacing and channel minimum bandwidth.

ii) Indicates a multiplexing pattern between an SS/PBCH block and a PDCCH/PDSCH.

- Pattern 1: All SCS combinations for FR1, all SCS combinations for FR2
- Pattern 2: Different SCS combinations for FR2 (except for the combination of 60 kHz for an initial DL BWP and 240 kHz SCS for a SS/PBCH block)
- Pattern 3: Same SCS combination for FR2 (for 120 kHz SCS)

iii) indicates the number of PRBs and OFDM symbols for a CORESET.

- $N_{RB}^{CORESET}$: number of RBs (i.e. {24, 48, 96})
- $N_{Symb}^{CORESET}$: number of symbols (i.e. {1, 2, 3})

iv) Indicates an offset (the number of RBs) between the first RB of an SS/PBCH block and the first RB of an RMSI CORESET.

- A range of an offset (number of RBs) is determined by the number of PRBs and sync raster0.
- Design to align a center of an SS/PBCH block and a center of an RMSI CORESET as close as possible.

When the TypeO-PDCCH common search space does not exist, pdcch-ConfigSIB1 provides information on a frequency location where an SSB/SIB1 exists and a frequency range where an SSB/SIB1 does not exist.

In the case of initial cell selection, a UE may assume that a half frame with an SS/PBCH block occurs with a period of 2 frames. Upon detection of an SS/PBCH block, if $k_{SSB} \leq 23$ for FR1 (Sub-6 GHz; 450 to 6000 MHz) and $k_{SSB} \leq 11$ for FR2 (mm-Wave, 24250 to 52600 MHz), a UE determines that a control resource set for the TypeO-PDCCH common search space exists. If $k_{SSB} > 23$ for FR1 and $k_{SSB} > 11$ for FR2, a UE determines that a control resource set for the TypeO-PDCCH common search space does not exist. $k_{SSB}$ represents a frequency/subcarrier offset between subcarrier 0 of an SS/PBCH block and subcarrier 0 of a common resource block for an SSB. For FR2, only a maximum of 11 values can be applied. $k_{SSB}$ can be signaled through an MIB. An SIB1 includes information related to availability and scheduling (e.g., transmission period, SI-window size) of the remaining SIBs (hereinafter, SIBx, where x is an integer greater than or equal to 2). For example, an SIB1 may inform whether SIBx is periodically broadcast or provided at a request of a UE by an on-demand scheme. When SIBx is provided by an on-demand method, an SIB1 may include information necessary for a UE to perform an SI request. An SIB1 is transmitted through a PDSCH, a PDCCH scheduling the SIB1 is transmitted through the Type0-PDCCH common search space, and the SIB1 is transmitted through a PDSCH indicated by a PDCCH.

SIBx is included in an SI message and transmitted through a PDSCH. Each SI message is transmitted within a periodically occurring time window (i.e., SI-window).

Hereinafter, beam alignment will be described.

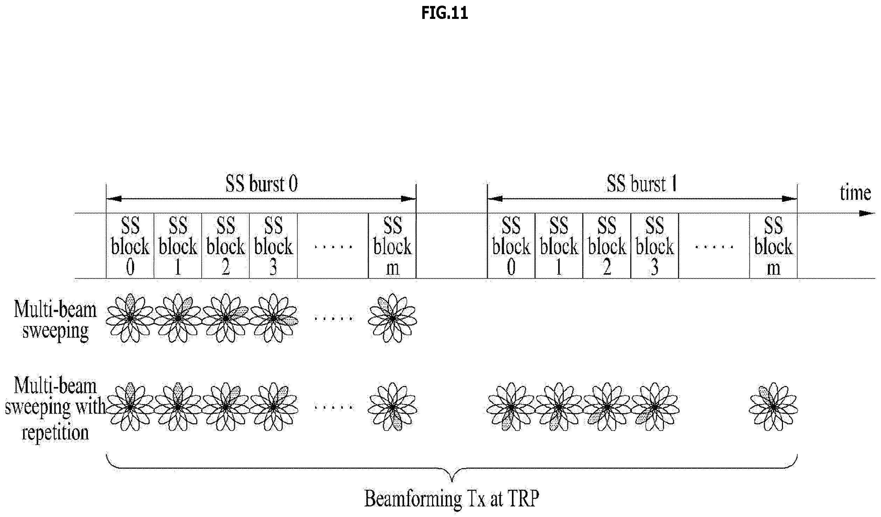

FIG. 11 illustrates multi-beam transmission of an SSB in a wireless communication system to which this disclosure can be applied.

Beam sweeping means that a Transmission Reception Point (TRP) (e.g., base station/cell) changes a beam (direction) of a wireless signal depending on time (hereinafter, beam and beam direction may be used interchangeably). An SSB may be transmitted periodically using beam sweeping. In this case, an SSB index is implicitly linked to an SSB beam. An SSB beam can be changed on an SSB (index) basis or on an SSB (index) group basis. In the latter case, an SSB beam remains the same within an SSB (index) group. That is, a transmission beam echo of an SSB is repeated in a plurality of consecutive SSBs. A maximum number of transmissions L of an SSB within an SSB burst set has a value of 4, 8, or 64 depending on a frequency band to which a carrier belongs. Therefore, a maximum number of SSB beams within an SSB burst set can be given as follows depending on a frequency band of a carrier.

- For frequency range up to 3 GHz, maximum number of beams = 4
- For frequency range from 3 GHz to 6 GHz, maximum number of beams = 8
- For frequency range from 6 GHz to 52.6 GHz, maximum number of beams = 64

**[0112]** * If multi-beam transmission is not applied, a number of SSB beams is 1.

When a terminal attempts initial access to a base station, the terminal may align a beam with the base station based on an SSB. For example, a terminal performs SSB detection and then identifies the best SSB. Afterwards, a terminal can transmit a RACH preamble to a base station using a PRACH resource linked to/corresponding to an index (i.e. beam) of the best SSB. An SSB can be used to align beams between a base station and a terminal even after initial connection.

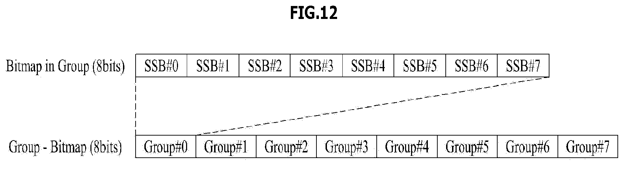

FIG. 12 illustrates an indication of an SSB actually transmitted in a wireless communication system to which the present disclosure can be applied.

Within an SSB burst set, up to L number of SSBs can be transmitted, and the number/position of SSBs actually transmitted may vary for each base station/cell. The number/position where SSBs are actually transmitted is used for rate-matching and measurement, and information on actually transmitted SSBs is indicated as follows.

**[0116]** - Cases related to rate-matching: It can be indicated through terminal-specific RRC signaling or RMSI. Terminal-specific RRC signaling includes full (e.g., length L) bitmaps in both below and above 6 GHz frequency ranges. On the other hand, RMSI includes a full bitmap below 6GHz, and includes a compressed bitmap above 6GHz as shown. Specifically, information on the actually transmitted SSBs can be indicated using a group-bit map (8 bits) + an intra-group bitmap (8 bits). Here, resources (e.g., RE) indicated through terminal-specific RRC signaling or RMSI are reserved for SSB transmission, and a PDSCH/PUSCH, etc. may be rake-matched in consideration of SSB resources.

**[0117]** - Cases related to measurement: When in RRC connected mode, a network (e.g., base station) may indicate a set of SSBs to be measured within a measurement interval. An SSB set can be indicated per frequency layer. If there is no indication regarding an SSB set, a default SSB set is used. The default SSB set includes all SSBs within a measurement interval. An SSB set may be indicated using a full (e.g., length L) bitmap of RRC signaling. When in RRC idle mode, a default SSB set is used.

<u>Multimedia Broadcast/Multicast Service (MBMS)</u>

3GPP MBMS can be divided into i) a single frequency network (SFN) method in which a plurality of base station cells are synchronized to transmit the same data through a physical multicast channel (PMCH) and ii) SC-PTM (Single Cell Point To Multipoint) method broadcasting within a cell coverage through a PDCCH/PDSCH channel. The SFN method is used to provide broadcasting services over a wide area (e.g., MBMS area) through semi-statically allocated resources, while the SC-PTM method is mainly used to provide broadcasting services only within a cell coverage through dynamic resources.

The SC-PTM provides one logical channel, an SC-MCCH (Single Cell Multicast Control Channel) and one or a plurality of logical channels, an SC-MTCH (Single Cell Multicast Traffic Channel). These logical channels are mapped to a downlink shared channel (DL-SCH), which is a transport channel, and a PDSCH, which is a physical channel. A PDSCH transmitting SC-MCCH or SC-MTCH data is scheduled through a PDCCH indicated by a group-RNTI (G-RNTI). In this case, a temporary multicast group ID (TMGI) corresponding to a service identifier (ID) may be mapped one-to-one with a specific G-RNTI value. Therefore, if a base station provides multiple services, multiple G-RNTI values may be allocated for SC-PTM transmission. One or a plurality of UEs may perform PDCCH monitoring using a specific G-RNTI to receive a specific service. Here, a DRX on-duration period may be configured exclusively for an SC-PTM for a specific service/specific G-RNTI. In this case, the UEs wake up only for a specific on-duration period and perform PDCCH monitoring for the G-RNTI.

Group common transmission and reception method for multicast and broadcast transmission

- PUCCH: Physical Uplink Control channel
- PUSCH: Physical Uplink Shared Channel
- MCCH: Multicast Control Channel
- MTCH: Multicast Traffic Channel
- RRM: Radio resource management
- RLM: Radio link monitoring
- SCS: Sub-carrier spacing
- RLM: Radio link monitoring
- DCI: Downlink Control Information
- CAP: Channel Access Procedure
- Ucell: Unlicensed cell
- PCell: Primary Cell
- PSCell: Primary SCG Cell
- TBS: Transport Block Size
- TDRA: Time Domain Resource Allocation
- SLIV: Starting and Length Indicator Value (An indication value for a starting symbol index and the number of symbols in a slot of a PDSCH and/or a PUSCH. It may be configured as a component of an entry constituting a TDRA field in a PDCCH that schedules a corresponding PDSCH and/or PUSCH.)
  BWP: BandWidth Part (It may be composed of continuous resource blocks (RBs) on a frequency axis. It may correspond to one numerology (e.g., SCS, CP length, slot/mini-slot duration, etc.). In addition, a plurality of BWPs may be configured in one carrier (the number of BWPs per carrier may also be limited), but the number of activated BWPs may be limited to a part (e.g., one) per carrier.)
- CORESET: control resource set (CONtrol REsourse SET) (It means a time-frequency resource region in which a PDCCH can be transmitted, and the number of CORESETs per BWP may be limited.)
- REG: Resource element group
- SFI: Slot Format Indicator (An indicator indicating a symbol level DL/UL direction within a specific slot(s), transmitted through a group common PDCCH).
- COT: Channel occupancy time
- SPS: Semi-persistent scheduling
- QCL: Quasi-Co-Location (A QCL relationship between two reference signals (RS) may mean that a QCL parameter obtained from one RS such as a Doppler shift, a Doppler spread, an average delay, a delay spread, a spatial Rx parameter, etc. can also be applied to another RS (or antenna port(s) of a corresponding RS). In the NR system, 4 QCL types are defined as follows. 'typeA': {Doppler shift, Doppler spread, average delay, delay spread}, 'typeB': {Doppler shift, Doppler spread}, 'typeC': {Doppler shift, average delay}, 'typeD': {Spatial Rx parameter}. For certain DL RS antenna port(s), a first DL RS may be configured as a reference for QCL type X (X=A, B, C, or D), and a second DL RS may be configured as a reference for QCL type Y (Y=A, B, C, or D, but X≠Y).)
  TCI: Transmission Configuration Indication (One TCI state includes a QCL relationship between DM-RS ports of a PDSCH, DM-RS ports of a PDCCH, or CSI-RS port(s) of a CSI-RS resource and one or more DL RSs. For 'Transmission Configuration Indication' among fields in DCI that schedules a PDSCH, a TCI state index corresponding to each code point constituting the field is activated by a MAC control element (CE), and a TCI state configuration for each TCI state index is configured through RRC signaling. In the Rel-16 NR system, a corresponding TCI state is configured between DL RSs, but a configuration between a DL RS and a UL RS or between a UL RS and a UL RS may be allowed in a future release. Examples of a UL RS include an SRS, a PUSCH DM-RS, and a PUCCH DM-RS.)
- SRI: SRS resource indicator (It indicates one of SRS resource index values configured in 'SRS resource indicator' among fields in DCI scheduling a PUSCH. When transmitting a PUSCH, a UE may transmit the PUSCH using the same spatial domain transmission filter used for transmission and reception of a reference signal associated with the corresponding SRS resource. Here, a reference RS is configured by RRC signaling through an SRS spatial relation information parameter (SRS-SpatialRelationInfo) for each SRS resource, and an SS/PBCH block, a CSI-RS, or an SRS may be configured as the reference RS.)
- TRP: Transmission and Reception Point
- PLMN ID: Public Land Mobile Network identifier
- RACH: Random Access Channel
- RAR: Random Access Response
- Msg3: This is a message transmitted through an uplink shared channel (UL-SCH) including a C-RNTI MAC CE or a common control channel (CCCH) service data unit (SDU), provided from a higher layer, and associated with a UE Contention Resolution Identity as part of a random access procedure.

- Special Cell: In case of a dual connectivity operation, the term special cell refers to the PCell of a master cell group (MCG) or the PSCell of a secondary cell group (SCG) depending on whether a MAC entity is related to the MCG or the SCG, respectively. Otherwise, the term Special Cell refers to the PCell. The Special Cell supports PUCCH transmission and contention-based random access and is always active.
- Serving Cell: It includes the PCell, the PSCell, and the secondary cell (SCell).
- CG: Configured Grant
- Type 1 CG or Type 2 CG: Type 1 configured grant or Type 2 configured grant
- Fall-back DCI: It indicates a DCI format that can be used for a fall-back operation, and for example, corresponds to DCI formats 0_0 and 1_0.
- non-fall-back DCI: It indicates a DCI format other than the fall-back DCI, for example, corresponds to DCI formats 0_1 and 1_1.
- SS: search space
- FDRA: frequency domain resource allocation
- TDRA: time domain resource allocation
- LP, HP: Low(er) priority, High(er) priority
- A/N for cell A: A/N (acknowledgement/negative acknowledgment) information for data (e.g., PDSCH) received in cell A
- UL CI: Uplink cancelation indication
- CFR: Common frequency resource for multicast and broadcast service (MBS). One DL CFR provides group common PDCCH and group common PDSCH transmission resources for MBS transmission and reception. One UL CFR provides HARQ-ACK PUCCH resources for group common PDSCH reception. One CFR is one MBS specific BWP or one UE specific BWP. Alternatively, one or a plurality of CFRs may be configured in one UE specific BWP. One CFR is associated with one UE specific BWP.
- TMGI: Temporary Mobile Group Identity. As an MBS service identifier, it indicates a specific service.
- G-RNTI: Group Radio Network Temporary Identifier. It indicates a UE group identifier that receives an MBS.

The above contents (3GPP system, frame structure, NR system, etc.) can be applied in combination with methods proposed in the present disclosure to be described later, or it may be supplemented to clarify the technical characteristics of the methods proposed in the present disclosure. In this disclosure, '/' means 'and', 'or', or 'and/or' depending on the context.

In the prior art, a base station may configure a UE-specific SPS configuration for a specific UE and allocate a repeated downlink SPS transmission resource according to a configured period. Here, DCI of a UE-specific PDCCH may indicate activation (SPS activation) of a specific SPS configuration index, and accordingly, the corresponding UE can repeatedly receive an SPS transmission resource according to a configured period. This SPS transmission resource is used for initial HARQ (hybrid automatic repeat request) transmission, and a base station may allocate a retransmission resource of a specific SPS configuration index through DCI of a UE-specific PDCCH. For example, when a UE reports a HARQ NACK for an SPS transmission resource, a base station can allocate a retransmission resource to DCI so that a UE can receive downlink retransmission. In addition, DCI of a UE-specific PDCCH may indicate deactivation (SPS release or SPS deactivation) of a specific SPS configuration index, and a UE receiving this does not receive the indicated SPS transmission resource. Here, a cyclic redundancy check (CRC) of DCI for activation/retransmission/deactivation of the SPS is scrambled with Configured Scheduling-RNTI (CS-RNTI).

Rel-17 NR intends to introduce a DL broadcast or DL multicast transmission method to support a Multicast Broadcast Service (MBS) service similar to LTE MBMS. A base station provides a point-to-multipoint (PTM) transmission method and/or a point-to-point (PTP) transmission method for DL broadcast or DL multicast transmission.

In a PTM transmission method for an MBS, a base station transmits a group common PDCCH and a group common PDSCH to a plurality of UEs, and a plurality of UEs simultaneously receive the same group common PDCCH and group common PDSCH transmission to decode the same MBS data.

On the other hand, in a PTP transmission scheme for an MBS, a base station transmits a UE-specific PDCCH and a UE-specific PDSCH to a specific UE, and only the corresponding UE receives the UE-specific PDCCH and the UE-specific PDSCH. Here, when there are a plurality of UEs receiving the same MBS service, a base station separately transmits the same MBS data to individual UEs through different UE-specific PDCCHs and UE-specific PDSCHs. That is, the same MBS data is provided to a plurality of UE, but different channels (i.e., PDCCH, PDCCH) are used for each UE.

As described above, in a PTM transmission method, a base station transmits a plurality of group common PDSCHs to a plurality of UEs. Here, a base station can receive UE's HARQ-ACKs for a group common PDSCH through a UE-specific PUCCH resource from a plurality of UEs.

Here, when a transport block (TB) for a multicast PDSCH (or group common PDSCH) is successfully decoded, a UE transmits an ACK as HARQ-ACK information. On the other hand, if a transport block (TB) is not successfully decoded, a UE transmits a NACK as HARQ-ACK information. This HARQ-ACK transmission method is referred to as an ACK/NACK based HARQ-ACK method (mode). In general, a UE may transmit an ACK/NACK based HARQ-ACK using a UE-specific PUCCH resource.

On the other hand, when a NACK only based HARQ-ACK method (mode) is configured for a multicast PDSCH (or group common PDSCH), a UE does not perform PUCCH transmission in case of an ACK and a UE perform PUCCH transmission in case of a NACK. Here, a PUCCH is a group common PUCCH resource, and only NACK can be transmitted as HARQ-ACK information.

In addition, in the present disclosure, a sub-slot, a mini-slot, and a symbol slot all represent a time unit smaller than one slot, and unless clearly distinguished and described for each in the present disclosure, all may be interpreted in the same meaning. Also, all of the above terms may be regarded/interpreted as one or more symbols in a slot.

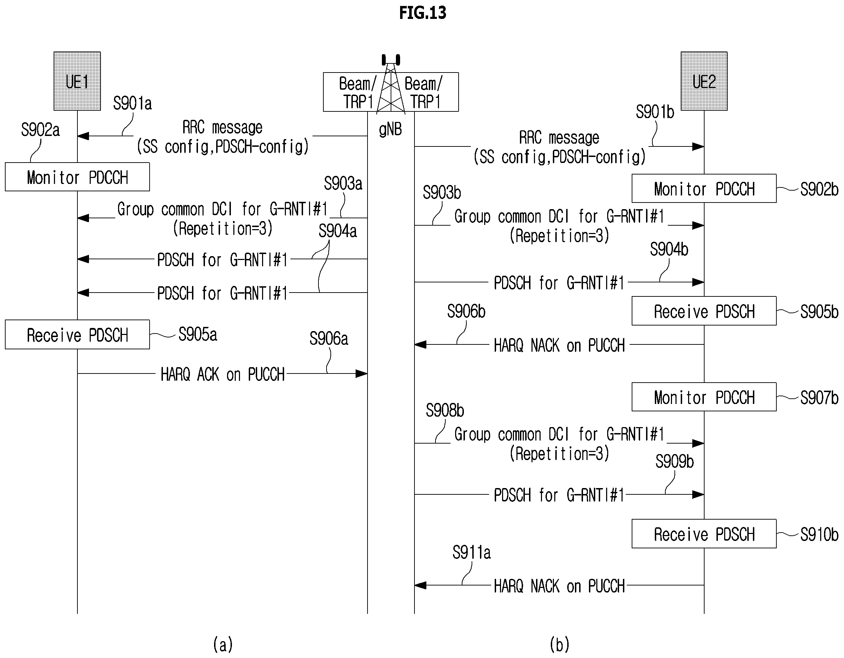

FIG. 13 illustrates a HARQ-ACK transmission and reception procedure for a multicast PDSCH according to an embodiment of the present disclosure.

FIG. 13(a) illustrates a signaling procedure between UE1 and a base station (gNB) (beam/TRP 1), and FIG. 13(b) illustrates a signaling procedure between UE2 and a base station (gNB) (beam/TRP 2). In addition, FIG. 13(a) illustrates a case without PDSCH retransmission, and FIG. 13(b) illustrates a case with PDSCH retransmission. In FIG. 13, for convenience of description, two procedures are illustrated together, but the present disclosure is not limited thereto. That is, UE1 and UE2 are not limited to accessing the same base station (through different beams/TRPs), and are not limited to performing the two procedures together. In other words, although FIGS. 13(a) and 13(b) are separate procedures, they are shown together for convenience of explanation, and common descriptions are described for common steps.

1. Although not shown in FIG. 13, (before the procedure of FIG. 13), a UE may enter an RRC connected mode (RRC_CONNECTED mode) and may transmit a messages/information that indicates one or more MBS services of interest to a base station.

A. An RRC message may be a group common message transmitted on a PTM multicast control channel (MCCH) or a UE-specific message transmitted on a UE-specific dedicated control channel (DCCH).
B. An interested MBS service in the message/information may mean either TMGI or G-RNTI included in a DL message received from a base station.

For example, the DL message may be a service availability message including TMGI#1, TMGI#3, TMGI#5 and TMGI#10. If a UE is interested in TMGI#5, the UE may indicate an order of TMGI#5 in the message/information. That is, the UE may report '3' to the base station.

As another example, the DL message may be a service availability message including G-RNTI#1, G-RNTI#3, G-RNTI#5 and G-RNTI#10. If a UE is interested in G-RNTI#10, the UE may indicate an order of G-RNTI#10 in the message/information. That is, the UE may report '4' to the base station.

2. Upon receiving the message/information, a base station may transmit at least one of i) a common frequency resource (CFR) configuration, ii) one or more group common PDSCH configurations including TCI states for one or more G-RNTI value(s), iii) a search space (SS) configuration including TCI states for one or more G-RNTI value(s) to the UE through an RRC message (S901a, S901b).

Although one RRC message is illustrated in FIG. 13, it is not limited thereto, and the configurations i) to iii) may be provided to a UE through different (or partially identical) RRC messages.

Upon receiving an RRC message from a base station, a UE may configure one or more group common PDSCH (e.g., group common SPS PDSCH) configurations according to the RRC message.

A. An RRC message may be a group common message transmitted on a PTM multicast control channel (MCCH) or a UE-specific message transmitted on a UE-specific dedicated control channel (DCCH).
B. A UE may be configured with at least a G-RNTI value for each MBS CFR or each serving cell. Alternatively, in addition to this, a GC-CS-RNTI (group common-configured scheduling-RNTI) may also be configured, and may be used for activating, retransmitting, or releasing one or more group common SPS configurations.

- if a UE has not configured with a GC-CS-RNTI for a CFR or a serving cell, when a CS-RNTI has been configured for the CFR or the serving cell, the UE may use the CS-RNTI to activate, retransmit or release one or more group common SPS configurations.
- A base station may associate a list of TMGIs or a list of G-RNTIs with one GC-CS-RNTI. In this case, a base station may provide a UE with a list of TMGIs or a list of G-RNTIs associated with the GC-CS-RNTI value.

C. Each PDSCH configuration (e.g., RRC parameter PDSCH-config) may include at least information elements (IE) for multicast and/or broadcast as shown in Table 9 below.

Table 9 illustrates the PDSCH-Config IE used to configure PDSCH parameters.

【Table 9】

**PDSCH-Config ::= SEQUENCE {**

dataScramblingIdentityPDSCH INTEGER (0..1023) OPTIONAL, -- Need S

dmrs-DownlinkForPDSCH-MappingTypeA SetupRelease { DMRS-

DownlinkConfig } OPTIONAL, -- Need M

dmrs-DownlinkForPDSCH-MappingTypeB SetupRelease { DMRS-

DownlinkConfig } OPTIONAL, -- Need M

tci-StatesToAddModList SEQUENCE (SIZE(1..maxNrofTCI-States)) OF TCI-State

OPTIONAL, -- Need N

tci-StatesToReleaseList SEQUENCE (SIZE(1..maxNrofTCI-States)) OF TCI-

StateId OPTIONAL, -- Need N

vrb-ToPRB-Interleaver ENUMERATED {n2, n4} OPTIONAL, -- Need S

resourceAllocation ENUMERATED { resourceAllocationType0,

```
resourceAllocationType1, dynamicSwitch},

pdsch-TimeDomainAllocationList SetupRelease { PDSCH-

TimeDomainResourceAllocationList } OPTIONAL, -- Need M

pdsch-AggregationFactor ENUMERATED { n2, n4, n8 } OPTIONAL, -- Need S

rateMatchPatternToAddModList SEQUENCE (SIZE

(1..maxNrofRateMatchPatterns)) OF RateMatchPattern OPTIONAL, -- Need N

rateMatchPatternToReleaseList SEQUENCE (SIZE

(1..maxNrofRateMatchPatterns)) OF RateMatchPatternId OPTIONAL, -- Need N

rateMatchPatternGroup1 RateMatchPatternGroup OPTIONAL, -- Need R

rateMatchPatternGroup2 RateMatchPatternGroup OPTIONAL, -- Need R

rbg-Size ENUMERATED {config1, config2},

mcs-Table ENUMERATED {qam256, qam64LowSE} OPTIONAL, -- Need S

maxNrofCodeWordsScheduledByDCI ENUMERATED {n1, n2}

...

}
```

Table 10 illustrates a description of the fields of the PDSCH-config of Table 9 above.

[Table 10]

| |
|---|
| PDSCH-Config field descriptions dataScramblingIdentityPDSCH, dataScramblingIdentityPDSCH2 Identifier(s) used to initialize data scrambling (c_init) for PDSCH. The dataScramblingIdentityPDSCH2 is configured if coresetPoolIndex is configured with 1 for at least one CORESET in the same BWP. |
| dmrs-DownlinkForPDSCH-MappingTypeA, dmrs-DownlinkForPDSCH-MappingTypeA-DCI-1-2 DMRS configuration for PDSCH transmissions using PDSCH mapping type A (chosen dynamically via PDSCH-TimeDomainResourceAllocation). Only the fields dmrs-Type, dmrs-AdditionalPosition and maxLength may be set differently for mapping type A and B. The field dmrs-DownlinkForPDSCH-MappingTypeA applies to DCI format 1_1 and the field dmrs-DownlinkForPDSCH-MappingTypeA-DCI-1-2 applies to DCI format 1_2. |
| dmrs-DownlinkForPDSCH-MappingTypeB, dmrs-DownlinkForPDSCH-MappingTypeB-DCI-1-2 |

(continued)

| |
|---|
| DMRS configuration for PDSCH transmissions using PDSCH mapping type B (chosen dynamically via PDSCH-TimeDomainResourceAllocation). Only the fields dmrs-Type, dmrs-AdditionalPosition and maxLength may be set differently for mapping type A and B. The field dmrs-DownlinkForPDSCH-MappingTypeB applies to DCI format 1_1 and the field dmrs-DownlinkForPDSCH-MappingTypeB-DCI-1-2 applies to DCI format 1_2. |
| maxNrofCodeWordsScheduledByDCI<br>Maximum number of code words that a single DCI may schedule. This changes the number of MCS/RV/NDI bits in the DCI message from 1 to 2. |
| mcs-Table, mcs-TableDCI-1-2<br>Indicates which MCS table the UE shall use for PDSCH. If the field is absent the UE applies the value 64QAM. The field mcs-Table applies to DCI format 1_0 and DCI format 1_1, and the field mcs-TableDCI-1-2 applies to DCI format 1_2. |
| pdsch-AggregationFactor<br>Number of repetitions for data. When the field is absent the UE applies the value 1. |
| pdsch-TimeDomainAllocationList, pdsch-TimeDomainAllocationListDCI-1-2<br>List of time-domain configurations for timing of DL assignment to DL data.<br>The field pdsch-TimeDomainAllocationList (with or without suffix) applies to DCI format 1_0 and DCI format 1_1, and if the field pdsch-TimeDomainAllocationListDCI-1-2 is not configured, to DCI format 1_2. If the field pdsch-TimeDomainAllocationListDCI-1-2 is configured, it applies to DCI format 1_2.<br>The network does not configure the pdsch-TimeDomainAllocationList-r16 simultaneously with the pdsch-TimeDomainAllocationList (without suffix) in the same PDSCH-Config. |
| rateMatchPatternGroup1, rateMatchPatternGroup1DCI-1-2<br>The IDs of a first group of RateMatchPatterns defined in PDSCH-Config- >rateMatchPatternToAddModList (BWP level) or in ServingCellConfig - >rateMatchPatternToAddModList (cell level). These patterns can be activated dynamically by DCI. The field rateMatchPatternGroup1 applies to DCI format 1_1, and the field rateMatchPatternGroup1DCI-1-2 applies to DCI format 1_2. |
| rateMatchPatternGroup2, rateMatchPatternGroup2DCI-1-2<br>The IDs of a second group of RateMatchPatterns defined in PDSCH-Config- >rateMatchPatternToAddModList (BWP level) or in ServingCellConfig - >rateMatchPatternToAddModList (cell level). These patterns can be activated dynamically by DCI. The field rateMatchPatternGroup2 applies to DCI format 1_1, and the field rateMatchPatternGroup2DCI-1-2 applies to DCI format 1_2. |
| rate Match Pattern ToAdd Mod List<br>Resources patterns which the UE should rate match PDSCH around. The UE rate matches around the union of all resources indicated in the rate match patterns. |
| rbg-Size<br>Selection between config 1 and config 2 for RBG size for PDSCH. The UE ignores this field if resourceAllocation is set to resourceAllocationType1. |
| resourceAllocation, resourceAllocationDCI-1-2<br>Configuration of resource allocation type 0 and resource allocation type 1 for non-fallback DCI. The field resourceAllocation applies to DCI format 1_1, and the field resourceAllocationDCI-1-2 applies to DCI format 1_2. |
| resourceAllocationType1GranularityDCI-1-2<br>Configure the scheduling granularity applicable for both the starting point and length indication for resource allocation type 1 in DCI format 1_2. If this field is absent, the granularity is 1 PRB. |
| tci-StatesToAdd Mod List<br>A list of Transmission Configuration Indicator (TCI) states indicating a transmission configuration which includes QCL-relationships between the DL RSs in one RS set and the PDSCH DMRS ports. |
| vrb-ToPRB-Interleaver, vrb-ToPRB-InterleaverDCI-1-2<br>Interleaving unit configurable between 2 and 4 PRBs. When the field is absent, the UE performs non-interleaved VRB-to-PRB mapping. |

3. When a search space (SS) for a configured CFR is configured, a UE monitors a PDCCH on the SS configured in the CFR configured to receive DCI with a CRC scrambled with a G-RNTI or a G-CS-RNTI (S902a, S902b).

4. If a data unit is available in a Multicast Traffic Channel (MTCH) of an MBS radio bearer (MRB) for an MBS service, according to a service-to-resource mapping, a base station constructs and transmits a transport block (TB) including a data unit for an SPS PDSCH occasion, i) associated with an MTCH of an MRB for an MBS service, ii) associated with a TMGI of an MBS service, iii) associated with a short ID of an MBS service, or iv) associated with a G-RNTI mapped to an MBS service.

In the case of group common dynamic scheduling of a TB, a base station transmits DCI to a UE on a PDCCH (S903a, S903b).

Here, a CRC of the DCI may be scrambled by a G-RNTI, a G-CS-RNTI or a CS-RNTI. Also, a PDCCH may be a group common PDCCH or a UE specific PDCCH.

In FIG. 13, a case in which a group common DCI with a CRC scrambled with G-RNTI#1 is transmitted, and repetition = 3 is exemplified.

The DCI may include the following information (fields).

- Identifier for DCI format: This information (field) may indicate either an MBS-specific DCI format or one of an existing DCI format for an MBS.
- Carrier indicator: This information (field) indicates a (serving or MBS specific) cell of a CFR through which a group common PDCCH/PDSCH is transmitted or a serving cell of an active BWP of a UE associated with the CFR.
- Bandwidth part indicator: This information (field) indicates a BWP ID assigned to a CFR through which a group common PDCCH/PDSCH is transmitted or a BWP ID of an active BWP of a UE associated with the CFR.

In addition, the DCI may include information on a frequency domain resource assignment, a time domain resource assignment, a VRB-to-PRB mapping, and a PRB bundling size indicator, a rate matching indicator, a ZP CSI-RS trigger, a modulation and coding scheme, a new data indicator (NDI), a redundancy version, a HARQ process number, a downlink assignment index, a transmit power control (TPC) command for a scheduled PUCCH, a PUCCH resource Indicator (PRI), a PDSCH-to-HARQ_feedback timing indicator (PDSCH-to-HARQ_feedback timing indicator), antenna port(s), a transmission configuration indication (TCI), an SRS request, a DMRS sequence initialization, and a priority indicator.

In the case of group common dynamic scheduling, a base station may provide a UE with one or more of the following service-to-resource mappings for an MBS service identified by a TMGI or a G-RNTI or a GC-CS-RNTI i) by a group common or UE-specific RRC message or ii) by a group common or UE-specific MAC CE. Data of an MBS service can be carried over an MBS radio bearer (MRB) of an MTCH associated with an MBS service, which is a multicast traffic logical channel. An RRC message may be a group common message transmitted through a PTM Multicast Control Channel (MCCH) or a UE-specific message transmitted through a UE-specific Dedicated Control Channel (DCCH). DCI scheduling a PDSCH carrying MBS service data may also indicate one or more of a short ID, an MTCH ID, an MRB ID, a G-RNTI value, and a TMGI value for an MBS service.

5. If a UE receives DCI with a CRC scrambled by a G-RNTI of interest in receiving, based on i) a mapping between MBS services and a HARQ process number (HPN) indicated in DCI and/or ii) (if available) a mapping between MBS services and an indicated short ID(s) in DCI, a UE may determine an MBS service related to one or more of short ID, MTCH ID, MRB ID, G-RNTI value, and TMGI value for each PDSCH occasion.

A base station may transmit a PDSCH carrying corresponding MBS service data to a UE (S904a, S904b) (In FIG. 13, the case where MBS service data mapped with G-RNTI#1 is transmitted is exemplified), and if a UE is interested in the determined MBS service(s), the UE can receive PDSCH transmission scheduled by DCI (S905a, S905b).

On the other hand, different from the example of FIG. 13, if a UE is not interested in the determined MBS service(s), the UE may not receive PDSCH transmission scheduled by DCI.

Then, according to the decoding state of PDSCH transmission, a UE transmits HARQ feedback to a base station.

6. A UE receiving group common DCI indicating PUCCH resource(s) for an MBS HARQ-ACK may transmit a HARQ-ACK to a base station through a PUCCH after receiving a PDSCH scheduled by DCI as follows (S906a).

A. In the case of PTM method 1, group common DCI may indicate a single PUCCH resource indicator (PRI) and a single PDSCH-to-HARQ_feedback timing indicator (K1) for at least an ACK/NACK based HARQ-ACK.

B. In case of UE-specific PUCCH resource allocation for an ACK/NACK based HARQ-ACK for group common DCI, different UEs in a group can be configured with different values of at least of a PUCCH resource and a candidate DL data-UL ACK (e.g., dl-DataToUL-ACK) in a UE-dedicated PUCCH configuration (e.g., PUCCH-config) for multicast or unicast (if PUCCH-config for multicast is not configured).

Different PUCCH resources may be allocated to different UEs by the same PUCCH resource indicator (PRI) and the same PDSCH-to-HARQ_feedback timing indicator (K1) of group common DCI.

C. In case of PTP retransmission, in UE-specific DCI, a PUCCH resource indicator (PRI) and a PDSCH-to-HARQ_feedback timing indicator (K1) can be interpreted based on a PUCCH configuration (e.g. PUCCH-config) for unicast regardless of whether or not a PUCCH configuration (e.g. PUCCH-config) for multicast is configured.
D. A PUCCH Resource Indicator (PRI) may be indicated by group common DCI as follows.

  1) Option 1A-1: A list of UE specific PRIs may be included in DCI.

  - Each PRI in a list may indicate an entry corresponding to a candidate PUCCH resource ID (e.g., pucch-ResourceId) value in a PUCCH configuration (e.g. PUCCH-config) for the same PUCCH resource or different PUCCH resource allocation for other UEs of a group receiving the same DCI. Other PRIs of DCI may indicate different entries in a PUCCH configuration (e.g., PUCCH-config).
  - A candidate PUCCH resource ID (e.g., pucch-ResourceId) value is configured by a higher layer (e.g., RRC), at least in multicast PUCCH configuration (e.g., PUCCH-config), different PUCCH resource ID (e.g., pucch-ResourceId) values may be configured for different UEs of the same group.

  2) Option 1A-2: group common PRI may be included in DCI.

  - A single group common PRI may indicate a corresponding entry for a candidate PUCCH resource ID (e.g., pucch-ResourceId) value in a UE specific PUCCH configuration (e.g., PUCCH-config) for the same or different PUCCH resource allocation for all UEs in a group.
  - A candidate PUCCH resource ID (e.g., pucch-ResourceId) value is configured by a higher layer (e.g., RRC), at least in PUCCH configuration for multicast (e.g., PUCCH-config), different PUCCH resource ID (e.g., pucch-ResourceId) values may be configured for different UEs of the same group.
  - When a PUCCH configuration (e.g., PUCCH-config) for multicast is configured for a HARQ-ACK for a group common PDSCH scheduled by group common DCI, a UE may assume that a PRI of group common DCI indicates a corresponding entry for a candidate PUCCH resource ID (pucch-ResourceId) value in a PUCCH configuration (e.g., PUCCH-config) for multicast. That is, a PRI value of group common DCI may be interpreted based on a PUCCH configuration (e.g., PUCCH-config) for multicast.
  - On the other hand, when a PUCCH configuration for multicast (e.g., PUCCH-config) is not configured for a HARQ-ACK for a group common PDSCH scheduled by group common DCI, a UE may assume that a PRI of group common DCI indicates a corresponding entry for a candidate PUCCH resource ID (pucch-ResourceId) value in a PUCCH configuration (e.g., PUCCH-config) for unicast. That is, a PRI value of group common DCI may be interpreted based on a PUCCH configuration (e.g., PUCCH-config) for unicast.

  E. K1 (PDSCH-to-HARQ_feedback timing indicator) may be indicated by group common DCI as follows.

  1) Option 1B-1: A list of UE specific K1 values may be included in DCI.

  - Each K1 in a list may indicate the same UL slot or different UL (sub)slots for other UEs in a group.

As an example, different K1 values may be assigned to different UEs. For example, K1-UE1, K2-UE2, K3-UE3, ...

As another example, a K1 value may be shared by multiple UEs (e.g., K1-UE1/UE2, K2-UE3/UE4).

As another example, one K1 value may be a reference and other K1 values may be assigned based on the reference. For example, a list of {K1_ref, K1_offset (offset from reference)} may be indicated in DCI.

For example, UE1 may use K1_ref, UE2 may use K1_ref + K1_offest1, and UE3 may use K1_ref + K1_offest2.

2) Option 1B-2: A group common K1 value may be included in DCI.

- A single K1 value may indicate a corresponding entry for a candidate DL data-UL ACK value (e.g., dl-DataToUL-ACK) in a UE specific PUCCH configuration (e.g., PUCCH-config) for the same or different PUCCH resource allocation for all UEs of a group receiving DCI. This can be applied when a DCI format of DCI is configured in a UE specific PUCCH configuration (e.g., PUCCH-config) for a K1 value.
- A candidate DL data-UL ACK value (e.g., dl-DataToUL-ACK) is configured by a higher layer (e.g., RRC), at least the PUCCH configuration for multicast (e.g., PUCCH-config) can be different for different UEs in the same group.
- When a PUCCH configuration (e.g., PUCCH-config) for multicast is configured for a HARQ-ACK for a group common PDSCH scheduled by group common DCI, a UE may assume that a K1 value of group common DCI indicates a corresponding entry for a candidate DL data-UL ACK value (e.g., dl-DataToUL-ACK) in a PUCCH configuration (e.g., PUCCH-config) for multicast. That is, a K1 value of group common DCI may be interpreted based on a PUCCH configuration (e.g., PUCCH-config) for multicast.

- On the other hand, when a PUCCH configuration for multicast (e.g., PUCCH-config) is not configured for a HARQ-ACK for a group common PDSCH scheduled by group common DCI, a UE may assume that a K1 value of group common DCI indicates a corresponding entry for a candidate DL data-UL ACK value (e.g., dl-DataToUL-ACK) in a PUCCH configuration (e.g., PUCCH-config) for unicast. That is, a K1 value of group common DCI may be interpreted based on a PUCCH configuration (e.g., PUCCH-config) for unicast.

In addition, when receiving group common DCI with a CRC scrambled by a G-RNTI and/or UE specific DCI with a CRC scrambled by a C-RNTI, when a Type-1 HARQ-ACK codebook for a PUCCH-config for multicast and/or a PUCCH-config for unicast is configured, a UE may configure Time Domain Resource Allocation (TDRA) to generate a type 1 HARQ-ACK codebook for HARQ-ACK(s) for a group common PDSCH scheduled by group common DCI and/or a UE specific PDSCH scheduled by UE specific DCI.

7. If decoding of a TB on a PDSCH transmission occasion fails, a UE may transmit a HARQ NACK to a base station on a PUCCH resources in a configured UL CFR (S906b).

By using a PUCCH resource, a UE may also transmit a HARQ-ACK for other PDSCH transmissions such as a unicast SPS PDSCH, a dynamic unicast PDSCH, PTP retransmission, and/or a dynamic group common PDSCH. In this case, to multiplex a HARQ-ACK on a PUCCH in a (sub)slot for an SPS PDSCH for multicast, an SPS PDSCH for unicast, a dynamically scheduled multicast PDSCH, and/or a dynamically scheduled unicast PDSCH, a UE may construct a codebook based on one or more options in step 7 above.

If a reference signal received power (RSRP) threshold is configured, a UE may use a NACK only based HARQ-ACK based on a measured RSRP of a serving cell. For example, if the measured RSRP is higher than (or equal to or higher than) the threshold value, a NACK only based HARQ-ACK may be transmitted through a group common PUCCH resource indicated by a PRI of DCI. On the other hand, if the measured RSRP is lower than (or equal to or less than) the threshold, a NACK only based HARQ-ACK may be changed to a HARQ-ACK based HARQ-ACK and transmitted through a UE-specific PUCCH resource indicated by a PRI of DCI.

Meanwhile, if a PDSCH aggregation factor (pdsch-AggregationFactor) is configured for a G-RNTI or a base station indicates a repetition number (repeat_number) in DCI, a TB scheduled by group common DCI may be repeated for the Nth HARQ transmission of a TB within each symbol allocation among each PDSCH aggregation factor (pdsch-AggregationFactor) consecutive slots or among each repetition number (repeat_number) consecutive slots.

8. A base station receiving a HARQ NACK with a TCI state may retransmit a PDCCH and a PDSCH with a TCI state in a DL CFR configured for TB retransmission. A UE may monitor a group common and/or UE-specific PDCCH with a TCI state on a search space configured in a DL CFR to receive TB retransmission (S907b).

A base station may retransmit a TB to only one of UEs in a group by a UE-specific PDCCH, and other UEs may not receive retransmission of a TB (e.g., because the other UEs successfully received the TB).

9. When a UE receives a PDCCH for retransmission of a TB (S908b), a UE may receive a PDSCH scheduled by DCI of a PDCCH (S909b, S910b).

If a UE successfully decodes a TB on a PDSCH, based on a mapping between an MBS service indicated by DCI and an HPN (HARQ process number) and/or between an MBS service indicated by DCI and a short ID(s) (if available), the UE may consider that the decoded TB is associated with an MTCH, an MRB, a TMGI, a G-RNTI and/or a short ID of an MBS service.

10. If decoding of a TB succeeds in a PDSCH transmission occasion, a UE may transmit a HARQ ACK to a base station through a PUCCH resource in a UL CFR configured according to step 7. On the other hand, if decoding of a TB on a PDSCH transmission occasion fails, a UE may transmit a HARQ NACK to a base station on a PUCCH resource in a configured UL CFR (S911b).

By using a PUCCH resource, a UE may also transmit HARQ-ACKs for other PDSCH transmissions such as a unicast SPS PDSCH, a dynamic unicast PDSCH, PTP retransmission, and/or a dynamic group common PDSCH. In this case, to multiplex HARQ-ACKs on a PUCCH in a (sub)slot for an SPS PDSCH for multicast, an SPS PDSCH for unicast, a dynamically scheduled multicast PDSCH, and/or a dynamically scheduled unicast PDSCH, a UE may construct a codebook based on one or more options in step 7 above.

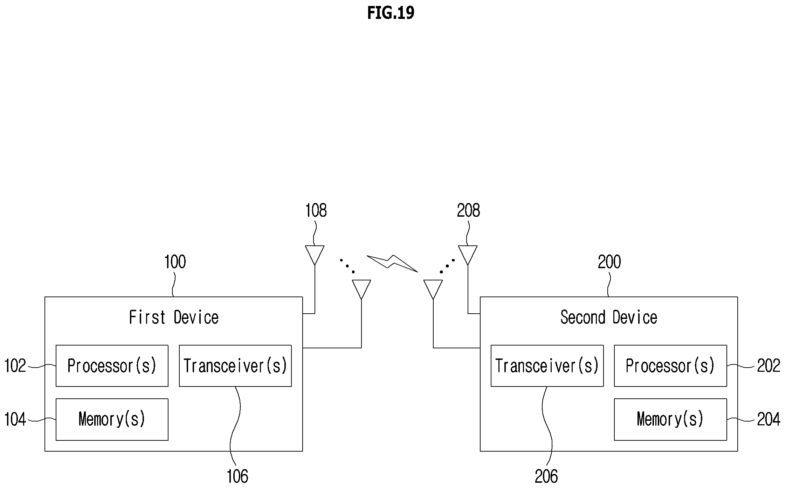

Meanwhile, an example of FIG. 13 is for convenience of description and does not limit the scope of the present disclosure. Some step(s) illustrated in FIG. 13 may be omitted depending on circumstances and/or settings. In addition, a base station and a UE in FIG. 13 are just one example, and may be implemented as the device illustrated in FIG. 19 below. For example, the processor (102/202) of FIG. 19 can control to transmit and receive channels/signals/data/information, etc. using the transceiver (106/206) and can also control to store transmitted or received channels/signals/information/data/information, etc. in the memory (104/204).

A base station may be a general term for an object that transmits and receives data with a terminal. For example, a base station may be a concept including one or more transmission points (TPs), one or more transmission and reception points (TRPs), etc. Also, a TP and/or a TRP may include a panel of a base station, a transmission and reception unit, etc. In addition, "TRP" may be replaced with expressions such as a panel, an antenna array, a cell (e.g., macro cell / small cell / pico cell, etc.) / a TP (transmission point), base station (base station, gNB, etc.), etc. As described above, TRPs may be classified according to information (e.g., index, ID) on a CORESET group (or CORESET pool). For example, when one UE is configured to transmit/receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

Referring to FIG. 13, for convenience of explanation, signaling between one base station and a UE is considered, however the signaling method can be applied to signaling between multiple TRPs and multiple UEs. Alternatively, a base station may include multiple TRPs, or may be one cell including multiple TRPs.

Meanwhile, depending on a start and a length of a CFR, a size of the first and last RB group (RBG), RB bundle or precoding RB group (PRG) for multicast may be different from a size corresponding to a BWP of a terminal.

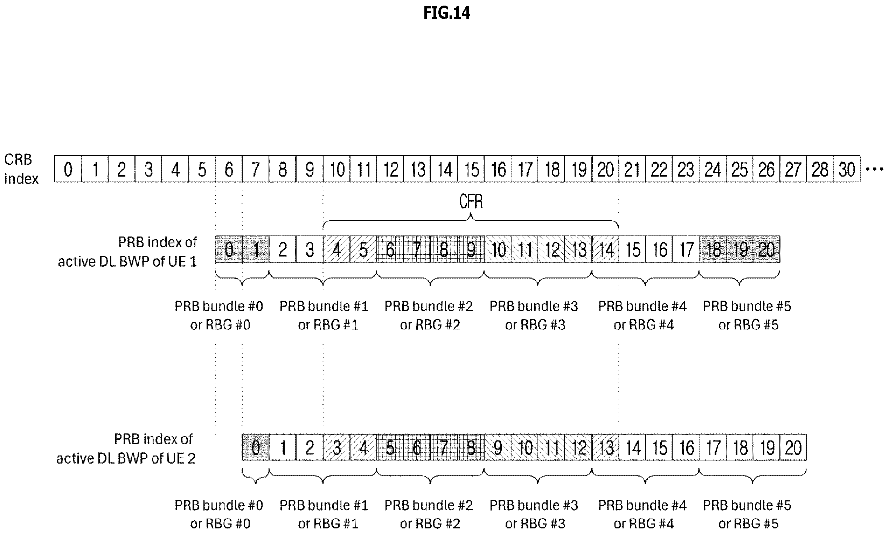

FIG. 14 illustrates that an RBG or RB bundle for multicast is defined relative to a common resource block in a wireless communication system to which the present disclosure can be applied.

FIG. 14 illustrates a case where two UEs belong to the same multicast group. A RBG or RB bundle size for both unicast and multicast is 4, and the first and last RBGs or RB bundles (RBG or RB bundles 4, 5, and 14 for UE 1; RBG or RB bundles 3, 4, and 13 for UE 2) for multicast may have fewer RBs than others in a CFR.

In this case, a unicast RBG/PRG may overlap with a start/end of a CFR. When a RBG/PRG overlaps with a start/end of CFR, it is not clear what a UE should assume about a FDRA of a unicast PDSCH. This can be left to the scheduler, but since unicast RBGs/PRGs are UE-specific, it is difficult to configure a CFR so that a start/end is aligned with unicast RBGs/PRGs for all UEs in the same multicast group. One approach is to split a unicast RBG/PRG that overlaps a start/end of a CFR into two parts and index each part separately. Another approach is for a UE to assume that only an RB outside a CFR are used for a unicast PDSCH for a unicast RBG/PRG that overlap a CFR boundary.

Meanwhile, according to the current standard, system information (SI) is broadcast as follows.

For SI message acquisition, PDCCH monitoring occasion(s) is determined according to searchSpaceOther-SystemInformation. When searchSpaceOtherSystemInformation is set to 0, PDCCH monitoring occasions for receiving an SI message in an SI window are the same as PDCCH monitoring occasions for SIB1, where mapping between monitoring occasions and SSBs is specified in TS 38.213. If searchSpaceOtherSystemInformation is not set to 0, monitoring occasions for an SI message are determined based on a search space indicated by searchSpaceOtherSystemInformation. PDCCH monitoring occasions for an SI message that do not overlap with UL symbols (determined according to tdd-UL-DL-ConfigurationCommon) are numbered sequentially from 1 within an SI window. The [x×N+K]-th PDCCH monitoring occasion(s) for an SI message within an SI window corresponds to the Kth transmitted SSB. Here, x = 0, 1, ..., X-1, K = 1, 2, ..., N. N is the number of actual transmitted SSBs determined according to ssb-PositionsInBurst in SIB1. X is equal to CEIL (number of PDCCH monitoring occasions in SI-window/N). Actually transmitted SSBs are numbered sequentially starting from 1 in ascending order of SSB indices. A UE assumes that a PDCCH for an SI message within an SI window is transmitted on at least one PDCCH monitoring occasion corresponding to each transmitted SSB, and the selection of SSBs for reception of SI messages depends on UE's implementation.

Additionally, according to the current standard, a periodic TRS and an aperiodic TRS operate as follows.

For a periodic CSI-RS resource in the NZP-CSI-RS-ResourceSet for which the higher layer parameter trs-Info is configured, a UE expects the TCI-state to indicate one of the following QCL type(s):

- 'typeC' with an SS/PBCH block and, when applicable, 'typeD' with the same SS/PBCH block, or
- 'typeC' with an SS/PBCH block and, when applicable, 'typeD' with a CSI-RS resource in the NZP-CSI-RS-Resource-Set for which the higher layer parameter repetition is configured.

For an aperiodic CSI-RS resource in the NZP-CSI-RS-ResourceSet for which the higher layer parameter trs-Info is configured, a UE expects that a TCI-state indicats a qcl-Type set to 'typeA' with a periodic CSI-RS resource in the NZP-CSI-RS-ResourceSet for which the higher layer parameter trs-Info is configured and when applicable, a qcl-Type set to 'typeD' with the same periodic CSI-RS resource.

For a CSI-RS resource in the NZP-CSI-RS-ResourceSet configured without the higher layer parameter trs-Info and without the higher layer parameter repetition, a UE expects a TCI-state to indicate one of the following QCL type(s):

- 'typeA' with a CSI-RS resource in the NZP-CSI-RS-ResourceSet for which the higher layer parameter trs-Info is configured, and, when applicable, 'typeD' with the same CSI-RS resource, or
- 'typeA' with a CSI-RS resource in the NZP-CSI-RS-ResourceSet for which the higher layer parameter trs-Info is configured, and, when applicable, 'typeD' with an SS/PBCH block, or
- 'typeA' with a CSI-RS resource in the NZP-CSI-RS-ResourceSet for which the higher layer parameter trs-Info is configured, and, when applicable, 'typeD' with a CSI-RS resource in the NZP-CSI-RS-ResourceSet for which the higher layer parameter repetition is configured, or
- When 'typeD' is not applicable, 'typeB' with a CSI-RS resource in the NZP-CSI-RS-ResourceSet for which the upper layer parameter trs-Info is configured.

For a CSI-RS resource in the NZP-CSI-RS-ResourceSet for which the higher layer parameter repetition is configured, a UE expects a TCI-state to indicate one of the following QCL type(s):

- 'typeA' with a CSI-RS resource in the NZP-CSI-RS-ResourceSet for which the higher layer parameter trs-Info is configured, and, when applicable, 'typeD' with the same CSI-RS resource, or
- 'typeA' with a CSI-RS resource in the NZP-CSI-RS-ResourceSet for which the higher layer parameter trs-Info is configured, and, when applicable, 'typeD' with a CSI-RS resource in the NZP-CSI-RS-ResourceSet for which the higher layer parameter repetition is configured, or
- 'typeC' with an SS/PBCH block and, when applicable, 'typed' with same SS/PBCH block.

RRC configurations related to a TRS are as follows.
The CSI-ResourceConfig information element (IE) defines a group of one or more NZP-CSI-RS-ResourceSet, CSI-IM-ResourceSet, and/or CSI-SSB-ResourceSet.
Table 11 illustrates the CSI-ResourceConfig IE.

[Table 11]

```
CSI-ResourceConfig ::= SEQUENCE {
csi-ResourceConfigId CSI-ResourceConfigId,
csi-RS-ResourceSetList CHOICE {
nzp-CSI-RS-SSB SEQUENCE {
nzp-CSI-RS-ResourceSetList SEQUENCE (SIZE (1..maxNrofNZP-CSI-RS-
ResourceSetsPerConfig)) OF NZP-CSI-RS-ResourceSetId OPTIONAL, -- Need
R
csi-SSB-ResourceSetList SEQUENCE (SIZE (1..maxNrofCSI-SSB-
ResourceSetsPerConfig)) OF CSI-SSB-ResourceSetId OPTIONAL -- Need R
},
csi-IM-ResourceSetList SEQUENCE (SIZE (1..maxNrofCSI-IM-
ResourceSetsPerConfig)) OF CSI-IM-ResourceSetId
},
bwp-Id BWP-Id,
resourceType ENUMERATED { aperiodic, semiPersistent, periodic },
...
}
```

Referring to Table 11, the nzp-CSI-RS-ResourceSetList field/parameter is a list of references to NZP CSI-RS resources used for beam measurement and reporting within the CSI-RS resource set.
The NZP-CSI-RS-ResourceSet IE is a set of non-zero power (NZP) CSI-RS resources (their IDs) and set-specific parameters.
Table 12 illustrates the NZP-CSI-RS-ResourceSet IE.

[Table 12]

```
NZP-CSI-RS-ResourceSet ::= SEQUENCE {
nzp-CSI-ResourceSetId NZP-CSI-RS-ResourceSetId,
nzp-CSI-RS-Resources SEQUENCE (SIZE (1..maxNrofNZP-CSI-RS-
ResourcesPerSet)) OF NZP-CSI-RS-ResourceId,
repetition ENUMERATED { on, off } OPTIONAL, -- Need S
aperiodicTriggeringOffset INTEGER(0..6) OPTIONAL, -- Need S
trs-Info ENUMERATED {true} OPTIONAL, -- Need R
...,
[[
aperiodicTriggeringOffset-r16 INTEGER(0..31) OPTIONAL -- Need S
]]
```

(continued)

```
}
```

Referring to Table 12, in this IE, the trs-Info indicates that antenna ports for all NZP-CSI-RS resources in the CSI-RS resource set are the same. For the NZP-CSI-RS-ResourceSet for which the higher layer parameter trs-Info is configured, a UE assumes that antenna ports with the same port index of NZP CSI-RS resources configured in the NZP-CSI-RS-ResourceSet are the same.

The NZP-CSI-RS-Resource IE is used to configure an NZP CSI-RS transmitted within a cell including IE that a UE can be configured to measure. Changing settings between periodic, semi-persistent or aperiodic for NZP-CSI-RS-Resource is not supported.

Table 13 illustrates the NZP-CSI-RS-Resource IE.

[Table 13]

```
NZP-CSI-RS-Resource ::= SEQUENCE {
nzp-CSI-RS-ResourceId NZP-CSI-RS-ResourceId,
resourceMapping CSI-RS-ResourceMapping,
powerControlOffset INTEGER (-8..15),
powerControlOffsetSS ENUMERATED{db-3, db0, db3, db6} OPTIONAL, -- Need R
scramblingID ScramblingId,
periodicityAndOffset CSI-ResourcePeriodicityAndOffset OPTIONAL, -- Cond
PeriodicOrSemiPersistent
qcl-InfoPeriodicCSI-RS TCI-StateId OPTIONAL, -- Cond Periodic
...
}
```

Referring to Table 13, the resourceMapping field/parameter indicates OFDM symbol location(s) within a slot and subcarrier occupancy (occupancy) in a PRB, for a CSI-RS resource. The qcl-InfoPeriodicCSI-RS includes a reference to one TCI-state in TCI-States to provide a QCL source and a QCL type for a target periodic CSI-RS. For periodic CSI-RS, a source may be an SSB or another periodic CSI-RS.

The TCI-State IE associates one or two DL reference signals with a corresponding QCL type.

Table 14 illustrates the TCI-State IE.

[Table 14]

```
   TCI-State ::= SEQUENCE {
tci-StateId TCI-StateId,
qcl-Type1 QCL-Info,
qcl-Type2 QCL-Info OPTIONAL, -- Need R

}
QCL-Info ::= SEQUENCE {
cell ServCellIndex OPTIONAL, -- Need R
bwp-Id BWP-Id OPTIONAL, -- Cond CSI-RS-Indicated
referenceSignal CHOICE {
csi-rs NZP-CSI-RS-ResourceId,
ssb SSB-Index
},
qcl-Type ENUMERATED {typeA, typeB, typeC, typeD},
...
}
```

Referring to Table 14, the referenceSignal field/parameter indicates a reference signal for which QCL information is provided, and is selected from a CSI-RS or an SSB. The qcl-Type indicates a QCL type.

The CSI-RS-ResourceMapping IE is used to configure resource element mapping of a CSI-RS resource in time and frequency domains.

Table 15 illustrates the CSI-RS-ResourceMapping IE.

[Table 15]

```
CSI-RS-ResourceMapping ::= SEQUENCE {
frequencyDomainAllocation CHOICE {
row1 BIT STRING (SIZE (4)),
row2 BIT STRING (SIZE (12)),
row4 BIT STRING (SIZE (3)),
other BIT STRING (SIZE (6))
},
```

```
nrofPorts ENUMERATED {p1,p2,p4,pS,p12,p16,p24,p32},
firstOFDMSymbolInTimeDomain INTEGER (0..13),
firstOFDMSymbolInTimeDomain2 INTEGER (2..12) OPTIONAL, -- Need R
cdm-Type ENUMERATED {noCDM, fd-CDM2, cdm4-FD2-TD2, cdm8-FD2-TD4},
density CHOICE {
dot5 ENUMERATED {evenPRBs, oddPRBs},
one NULL,
three NULL,
spare NULL
},
freqBand CSI-FrequencyOccupation,

}
```

Referring to Table 15, frequencyDomainAllocation indicates frequency domain allocation within a physical resource block. The firstOFDMSymbolInTimeDomain field/parameter indicates time domain allocation within a physical resource block.

In the prior art, when performing semi-persistent scheduling (SPS) transmission (e.g., group common SPS) according to a plurality of SSBs, it is not clear how a UE assumes a QCL relationship (e.g., a QCL relationship between each SPS PDSCH and an SSB within a group common SPS, or a QCL relationship between each configuration and an SSB in multiple SPS configurations).

Therefore, this disclosure proposes a HARQ retransmission of broadcast transmission and a QCL source-based group common SPS PDSCH transmission and reception method.

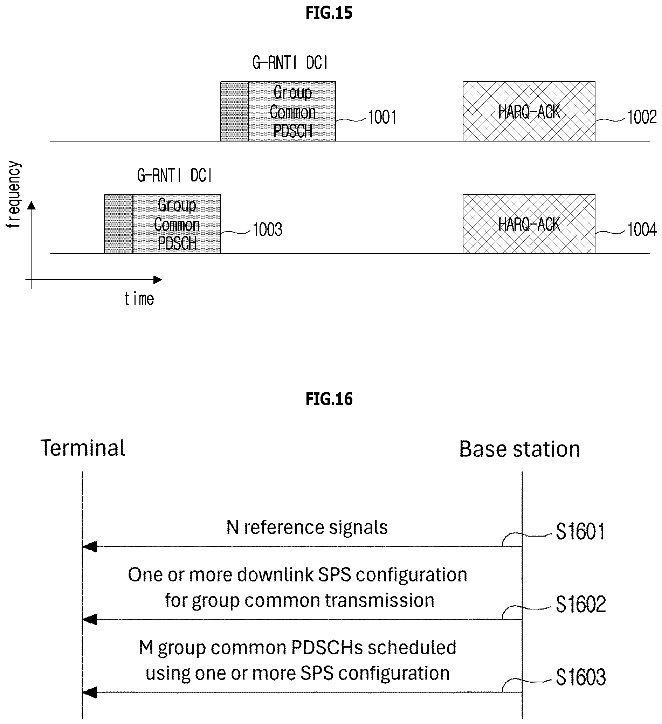

FIG. 15 illustrates group common PDCCH/PDSCH transmission and HARQ-ACK transmission in a wireless communication system to which the present disclosure can be applied.

As shown in FIG. 15, a UE can receive group common PDSCHs (or GC-PDSCH)/PDCCHs (or GC-PDCCH) (e.g. multicast PDCCH/PDSCH, broadcast PDCCH/PDSCH) scheduled for different G-RNTIs (or G-CS-RNTIs) through FDM or TDM. Additionally, a UE can transmit HARQ-ACK transmission/feedback for a group common PDSCH/PDCCH to a base station.

Referring to FIG. 15, a UE can receive DCI (i.e., group common DCI) having a CRC scrambled with a G-RNTI and a group common PDSCH scheduled by the DCI (1001). Then, the UE may decode the group common PDSCH and transmit a HARQ-ACK to a base station based on the decoding result (1002). Additionally, the UE can receive DCI (i.e., group common DCI) with a CRC scrambled by a G-RNTI and a group common PDSCH scheduled by the DCI (1003). Then, the UE may decode the group common PDSCH and transmit a HARQ-ACK to the base station based on the decoding result (1004).

As shown in FIG. 15, a UE can receive group common PDCCH/PDSCHs scheduled for different G-RNTIs through FDM or TDM. A base station can configure a common frequency resource (CFR), which is a frequency range similar to a BWP, and a UE receives a group common PDCCH/PDSCH through the CFR. A UE in connected mode (e.g., RRC_CONNECTED) activates one DL BWP to receive a unicast PDCCH/PDSCH and receives a group common PDCCH/PDSCH through a CFR connected to the activated DL BWP. Here, a UE can transmit multicast HARQ-ACK transmission for a group common PDCCH/PDSCH. A UE in idle mode (e.g., RRC_IDLE) or inactive mode (e.g., RRC_INACTIVE) receives a group common PDCCH through a CFR connected to an initial DL BWP.

Hereinafter, in the description of the present disclosure, a group common PDCCH/PDSCH includes a PDCCH/PDSCH transmitted in a broadcast transmission method and/or a multicast transmission method. That is, a group common PDCCH/PDSCH includes a broadcast PDCCH/PDSCH and/or a multicast PDCCH/PDSCH. Additionally, DCI transmitted through a group common PDCCH may be referred to as group common DCI, and as above, group common DCI includes broadcast DCI and/or multicast DCI. Additionally, a TB transmitted through a group common PDSCH may be referred to as a group common TB, and as above, a group common TB includes a broadcast TB and/or a multicast TB. Additionally, a UE may transmit a unicast HARQ-ACK or a group common HARQ-ACK for a group common PDSCH.

Embodiment 1: Method for configuring a HARQ process number (HPN: HARQ Process Number) and a new data indicator (NDI) for group common PDCCH/PDSCH (GC-PDCCH/GC-PDSCH) transmission

A base station may periodically configure an MTCH time window for data transmission of an MBS Traffic Channel (MTCH). Here, a plurality of PDCCH monitoring occasions (MO) within one MTCH time window may be configured, and a specific MO may be configured to be mapped to a specific SSB index (or specific SSB index group). Here, within the time window, a specific CFR may be mapped to a specific G-RNTI, a specific G-RNTI group, a specific search space, or a specific search space group.

There may be multiple MOs mapped to the same SSB index (or SSB index group) within the same MTCH time window or within the same MTCH time window group. In this case, according to DCI information received from different MOs (e.g., MO1 and MO2) for the same SSB index (or SSB index group), a UE determines that the same TB (transport block) has been HARQ retransmitted to different MOs. Alternatively, it may be determined that different TBs are transmitted to different MOs.

For example, DCI of MO1 and DCI of MO2 transmitted and received within the same MTCH time window or within the same MTCH time window group indicate the same HPN and the same NDI value, and a CRC may be scrambled with the same G-RNTI. In this case, a UE may determine that MO1 and MO2 are scheduling the same TB. Additionally, a UE can soft combine a TB of a PDSCH scheduled by the DCI of MO1 and a TB of a PDSCH scheduled by MO2 into the same reception buffer.

As another example, DCI of MO1 and DCI of MO2 transmitted and received within the same MTCH time window or within the same MTCH time window group indicate different HPN values, and a CRC may be scrambled with the same or different G-RNTI. In this case, the UE may determine that MO1 and MO2 are the same or schedule different TBs of different services. Additionally, a UE can receive a TB of a PDSCH scheduled by DCI of MO1 and a TB of a PDSCH scheduled by MO2 in separate reception buffers.

As another example, DCI of MO1 and DCI of MO2 transmitted and received within the same MTCH time window or within the same MTCH time window group indicate the same HPN value and different NDI values, and a CRC can be scrambled with the same or different G-RNTI. Alternatively, the DCI of MO1 and the DCI of MO2 indicate different NDI values without an HPN field, and a CRC may be scrambled with the same or different G-RNTI. In this case, a UE may determine that MO1 and MO2 are the same or schedule different TBs of different services. Additionally, a UE can receive a TB of a PDSCH scheduled by DCI of MO1 and a TB of a PDSCH scheduled by MO2 in separate reception buffers.

As another example, DCI of MO1 and DCI of MO2 transmitted and received within the same MTCH time window or within the same MTCH time window group do not have an HPN field and an NDI field, and a CRC can be scrambled with different G-RNTIs. In this case, a UE may determine that MO1 and MO2 schedule different TBs of different services. Additionally, a UE can receive a TB of a PDSCH scheduled by DCI of MO1 and a TB of a PDSCH scheduled by MO2 in separate reception buffers.

As another example, DCI of MO1 and DCI of MO2 transmitted and received within the same MTCH time window or within the same MTCH time window group do not have an HPN field and an NDI field, and a CRC may be scrambled with the same G-RNTI. In this case, a UE may determine that MO1 and MO2 are scheduling the same TB. A UE can soft combine a TB of a PDSCH scheduled by DCI of MO1 and a TB of a PDSCH scheduled by MO2 into the same reception buffer.

There may be a plurality of MOs mapped to the same SSB index (or SSB index group) for different MTCH time windows or different MTCH time window groups. In this case, regardless of DCI information received from different MOs (e.g., MO1 and MO2) for the same SSB index (or SSB index group), (i.e., ignoring whether HPN values or NDI values indicated by different DCIs are the same), a UE may determine that different TBs are transmitted in different MOs. That is, a UE may determine that the same TB is not retransmitted in different MTCH time windows (i.e. outside of one MTCH time window) or in different MTCH time window groups (i.e. outside of one MTCH time window group). Here, it may be configured/defined so that an HPN and an NDI are not included in different DCIs.

In the above-described proposed method, an MTCH time window group can be defined in the following manner.

For example, an MTCH time window group may be defined as a group of MTCH time windows providing the same G-RNTI(s) or service(s). Alternatively, an MTCH time window group may be defined as a group of MTCH time windows belonging to the same broadcast control channel (BCCH) modification period or BCCH repetition period. Alternatively, an MTCH time window group may be defined as a group of MTCH time windows belonging to the same MCCH (multicast control channel) modification period or MCCH repetition period. Alternatively, an MTCH time window group may be defined as a group of MTCH time windows belonging to a duration starting from a specific SFN value and ending with a specific SFN value.

Additionally, in the proposed method, a base station can configure (in case of SFN (single frequency network) broadcast) the presence or absence of an HPN field and/or NDI field in broadcast DCI for each G-RNTI, each MO, or each MTCH time window.

It is assumed that first DCI received within the same MTCH time window or within the same MTCH time window group schedules repeated transmission of a plurality of PDSCHs transmitting a specific TB, and second DCI is received between repeated transmissions of the plurality of PDSCHs. In this case, for DCIs whose CRC is scrambled with the same G-RNTI, a UE can receive as follows.

1) If first DCI and second DCI indicate the same HPN value and different NDI values, or if first DCI and second DCI indicate different NDI values without an HPN field (i.e. when an NDI is toggled),

After successfully receiving repeated transmission of a plurality of PDSCHs according to first DCI (if HARQ-ACK transmission is possible, after transmitting HARQ-ACK information with HARQ-ACK feedback), a UE can decode a PDSCH according to second DCI.

Alternatively, a UE may decode a PDSCH according to second DCI after repeated transmission of a plurality of PDSCHs according to first DCI is completed.

Alternatively, even if repeated transmission of a plurality of PDSCHs according to first DCI does not end, a UE may decode a PDSCH according to second DCI. In this case, the TB of multiple PDSCHs according to first DCI may not be successfully received.

2) If first DCI and second DCI do not include both an HPN field and an NDI field,

After successfully receiving repeated transmission of a plurality of PDSCHs according to first DCI (if HARQ-ACK transmission is possible, after an ACK is transmitted through HARQ-ACK feedback), a UE can decode a PDSCH according to second DCI.

Alternatively, a UE may decode a PDSCH according to second DCI after repeated transmission of a plurality of PDSCHs according to first DCI is completed.

Alternatively, even if repeated transmission of a plurality of PDSCHs according to first DCI does not end, a UE may decode a PDSCH according to second DCI. In this case, the TB of multiple PDSCHs according to first DCI may not be successfully received.

Embodiment 2: QCL configuration method of SPS for group common PDCCH/PDSCH transmission

Hereinafter, in this embodiment, a PDSCH may mean a PDSCH scheduled using a group common (e.g., broadcast or multicast) SPS configuration (e.g., SPS-Config-Multicast). Here, one or more group common (e.g., broadcast or multicast) SPS configurations within a CRF may be configured.

Alternative 1: The mapping relationship between SPS transmission and an SSB can be configured in one or more ways as follows.

Here, group common SPS (e.g., broadcast SPS or multicast SPS) may be activated by a SIB or MCCH message without active DCI or may be activated by active DCI.

Option 1: Multiple SPS PDSCH transmissions for one TB transmission may be scheduled within one SPS period (or SPS window), where each SPS PDSCH may be mapped to each SSB index.

Here, the name of an SPS cycle and an SPS window is an example, and a predetermined time interval in which multiple SPS PDSCH transmissions for one TB transmission are scheduled may be referred to by a different name.

For example, the $[x \times N+K]$-th SPS PDSCH(s) within an SPS period may correspond to the K-th transmitted SSB. Here, $x = 0, 1, ...X-1$, $K = 1, 2,... N$, N is the number of SSBs actually transmitted according to the present disclosure, X is the same as CEIL (number of SPS PDSCH(s) within SPS period / N) (here, CEIL (x) is the smallest integer not smaller than x). Actually transmitted SSBs are numbered/indexed sequentially in ascending order of SSB indexes.

Here, when repetitive PDSCH transmission is configured, a plurality of SPS PDSCHs may be configured for the specific K-th transmitted SSB within an SPS period. On the other hand, if repetitive transmission is not configured, only one SPS PDSCH may be configured for the specific K-th transmitted SSB within an SPS period.

Additionally, in the case of MBSFN (multimedia broadcast single frequency network) transmission, each SPS PDSCH may be mapped to a TRS that is a QCL source (i.e., QCL reference RS).

A UE may assume that there are multiple SPS PDSCH transmissions for the same TB within one SPS period, and each SPS PDSCH transmission within one SPS period is QCLed with each SSB index according to the order of an SSB index.

Option 2: When a plurality of SPS configurations (e.g., SPS-Config-Multicast) are configured, a specific K-th SPS configuration index may be mapped to a specific K-th transmitted SSB index. Alternatively, a specific K-th SPS configuration index may be mapped to multiple SSB indexes.

Here, one or more PDSCHs may be scheduled within an SPS period using one SPS setting.

That is, the option 1 illustrates that different SSB indexes correspond to each PDSCH, and the option 2 illustrates that different SSB indexes correspond to each SPS setting.

Here, the options 1 and 2 may be combined. For example, when only option 2 is applied, one or more PDSCHs scheduled by each SPS configuration may correspond to the same SSB index. On the other hand, when options 1 and 2 are applied in combination, each SPS configuration as well as one or more PDSCHs scheduled by each SPS configuration may correspond to a different SSB index.

Option 3: When multiple G-CS-RNTIs (group-configured scheduling-RNITs) are configured, a specific K-th G-CS-RNTI may be mapped to an SSB index of a specific K-th transmitted SSB. Multiple G-CS-RNTIs can be mapped to the same or different G-RNTIs or services. Alternatively, a specific K-th G-CS-RNTI is mapped to an SSB index of a specific K-th transmitted SSB.

For example, the following mapping relationship can be configured/defined/promised.

- G-RNTI#1 - SSB 1,2,3,4 for SPS setup #1
- G-RNTI#2 - SSB 5,6,7,8 for SPS setup #1
- G-RNTI#3 - SSB 3,4,5,6 for SPS setup #1

Option 4: If SPS configuration #1 in an MCCH QCLed with SSB #a and SPS configuration #2 in an MCCH QCLed with SSB #b are configured, it can be configuration as QCL between SPS configuration #1 and SSB #a and between SPS configuration #2 and SSB #b.

SPS PDSCH allocation may be provided according to SPS configuration #1 within an MCCH to which SSB #a is associated, and SPS PDSCH allocation may be provided according to SPS configuration #2 within an MCCH to which SSB #b is associated.

Alt 2: When activating group common SPS (e.g., broadcast SPS or multicast SPS) according to activation DCI, a mapping relationship between SPS transmission and an SSB can be configured as follows.

Periodic SPS PDSCH transmission activated from activation DCI, which is QCLed with a specific SSB index and QCL of a specific monitoring occasion (MO) received within the same MTCH time window or within the same MTCH time window group, can be assumed to have a QCL relationship with the specific SSB index. That is, an SSB index QCLed with DCI can be applied to a QCL relationship of SPS PDSCH transmission activated by corresponding DCI.

Alternatively, activation DCI of a specific MO received within the same MTCH time window or within the same MTCH time window group may also indicate a TCI state of an activated periodic SPS PDSCH.

A UE can periodically receive an SPS PDSCH according to the indication/configuration/mapping.

Here, a base station can map an SSB and a MO as follows.

The [x×N+K]-th PDCCH monitoring occasion(s) within a specific window (can be replaced by on-duration or active time) within a specific MTCH window corresponds to the K-th transmitted SSB. Here, x = 0, 1, ..., X-1, K = 1, 2, ..., N. N is the number of SSBs actually transmitted according to this disclosure. X is equal to CEIL (number of PDCCH monitoring occasions in the window/N). Actually transmitted SSBs are numbered sequentially starting from 1 in ascending order of SSB indices.

A base station can configure N (N is a natural number) actually transmitted SSBs (actually transmitted SSBs) only with specific SSBs in the [x×N+K]-th PDCCH monitoring occasion(s) within a specific MTCH time window. Here, the time window may be configured by a base station or may be a pre-fixed value. For example, the time window may be configured to be mapped to a specific CFR, a specific G-RNTI, a specific G-RNTI group, a specific search space, or a specific search space group.

One or more cell groups or one or more SFN areas may be configured to be mapped to the time window. Additionally, a window for a G-RNTI for SFN transmission and a window for a G-RNTI for non-SFN transmission may be configured differently. A window for a G-RNTI for non-SFN transmission may not be mapped to a cell group/SFN area. On the other hand, a window for a G-RNTI for SFN transmission can be mapped to a cell group/SFN area.

Alternatively, both a G-RNTI for SFN transmission and a G-RNTI for non-SFN transmission may be mapped to the same window. In this case, a G-RNTI for SFN transmission and a G-RNTI for non-SFN transmission may be mapped to different MOs within the same window.

In the time window, a GC (group common)-PDCCH or GC-PDSCH for the same SSB may be transmitted repeatedly. Additionally, a window for a G-RNTI for which repetitive transmission is configured may be configured differently from a window for a G-RNTI for which repetitive transmission is not configured.

For example, when repetitive transmission is configured, multiple MOs for the K-th transmitted SSB within a window may be configured. If repetitive transmission is not configured, only one MO for the K-th SSB within a window can be configured.

Alternatively, when repeated transmission is configured, multiple MOs for the K-th transmitted SSB within a window are configured, and the same GC-PDCCH transmission may be repeated in multiple MOs.

Here, when repetitive transmission is not configured, even if multiple MOs for the K-th transmitted SSB within a window are configured, GC-PDCCH transmission can be performed in only one of these MOs. In this case, when a UE receives GC-PDCCH transmission from one MO, the UE can skip PDCCH monitoring or lower its priority (de-prioritization) by assuming that there will be no GC-PDCCH transmission in other MOs for the same SSB within the same window.

Alternatively, if repetitive transmission is not configured and multiple MOs for the K-th transmitted SSB within a window are configured, Different TB transfers in different MOs for the same SSB.

Alternatively, both a G-RNTI for SFN transmission and a G-RNTI that does not perform SFN may be mapped to the same window. In this case, a G-RNTI for SFN and a G-RNTI that does not perform SFN may be mapped to different MOs within the same window.

For example, a first MO for the same SSB within a window may support SFN transmission, and a second MO may not support SFN transmission. In this case, a UE can monitor a PDCCH using a TRS as a QCL source in a first MO, and monitor a PDCCH by using only an SSB of a serving cell as a QCL source in a second MO.

As a QCL source for a specific window or a specific MO, if i) a TRS is configured, or if ii) both TRS and SSB are configured, a UE may assume that SFN transmission is performed for a window or MO.

If a TRS is not configured as a QCL source for a specific window or a specific MO, a UE may assume that SFN transmission is not performed for that window or that MO.

Meanwhile, a base station can configure actual transmitted SSBs only with different SSB(s) for different time windows. For example, multiple time windows may be configured in a modification period, and the number N value of actual transmitted SSBs may be configured differently for each time window. Additionally, SSB indices of actual transmitted SSBs may be configured to be different for each time window. Here, one or more time windows for a specific G-RNTI or a specific G-RNTI group may be configured to include all SSBs in a cell.

For example, a base station can configure a modification period to 5 seconds and configure 100 time windows within 5 seconds. Additionally, a base station can configure to map 10 G-RNTI groups or 10 G-RNTIs to 100 time windows. This mapping between a G-RNTI and a window can be configured to repeat identically every modification period. Here, a base station can configure to transmit only the PDCCH/PDSCH for N_k actual transmitted SSBs in one or multiple time windows (mapped) for the k-th G-RNTI group or k-th G-RNTI. Here, a plurality of time windows may be repeated according to a period of P_k (e.g., 160ms). Here, N_k is equal to or smaller than a total number of SSBs in a cell.

The same or different N_k value and/or P_k value may be configured for different k values. In other words, a number of actual transmitted SSBs in a time window and/or a period of a time window may be configured individually (differently) for each G-RNTI group or G-RNTI. Additionally, N_k value and/or P_k value may change every modification period. A base station may configure the same or different N_k value and/or P_k value for each G-RNTI group, G-RNTI, CFR, or time window every modification period. These N_k values and P_k values can be transmitted to a UE through a multicast control channel (MCCH) once or multiple times every modification period. A base station can configure the same or different time window length for each G-RNTI group, G-RNTI, CFR, or time window every modification period.

Additionally, a base station can configure actual transmitted SSBs individually (differently) for different CFRs. For example, N value, which is a number of actual transmitted SSBs, can be configured individually (differently) for each CFR. Additionally, SSB indices of actual transmitted SSBs can be configured individually (differently) for each CFR. Here, a specific G-RNTI or a specific G-RNTI group can be configured to be mapped to a specific CFR. Alternatively, a specific G-RNTI or a specific G-RNTI group may be configured to be mapped to a specific time window of a specific CFR.

Alternatively, a base station may configure SFN transmission to be performed or not to perform SFN transmission for different CFRs. For example, SFN transmission may be performed or not performed for each CFR. Alternatively, different SFN areas may be configured for each CFR. For example, G-RNTI#1 and/or SFN area#1 may be configured for CFR#1, G-RNTI#2 and/or SFN area#2 may be configured for CFR#2, G-RNTI#3 may be configured but SFN area may be configured for CFR#3. Here, a TRS may be configured in a CFR where an SFN area is configured, as described above. Additionally, a TRS may be configured for each CFR, or a specific TRS configuration may be configured to be mapped to one or multiple CFRs. Alternatively, a specific TRS configuration may be configured to be mapped to one or multiple G-RNTIs. Alternatively, a specific TRS configuration may be configured to be mapped to one or more cell groups or one or more SFN areas. Alternatively, a specific TRS configuration may be configured to be mapped to one or more search space IDs or one or more CORESET IDs. Alternatively, a specific TRS configuration can be configured to be mapped to only to one or multiple MOs or one or multiple SSB indexes within a window.

A UE that wants to receive group common DCI (i.e., group common PDCCH) and a group common PDSCH for a specific G-RNTI, can receive group common DCI and PDSCH by selecting a CFR, search space (or search space group), time window, MO, or SSB index to which a specific G-RNTI is mapped. Here, a terminal can receive DCI or a PDSCH according to a TRS configuration for the mapped CFR or search space (or search space group or CORESET) or time window or MO or SSB index.

Here, only N specific SSB(s) may be provided in a specific time window. For example, if SSBs for a specific G-RNTI are transmitted only for SSB#4, 5, 6, and 7, N = 4 is configured. A base station may provide a UE with an SSB index (related to) for each time window or for each G-RNIT or each G-RNTI group. For example, a base station can broadcast SSB#4, 5, 6, and 7 to a UE using an SSB bitmap, etc. Additionally, this configuration can be broadcast through an MBS SIB or an MCCH or a group common MAC CE.

Here, if SSB#4,5,6,7 > threshold (i.e., if a number of SSBs provided in a specific time window is greater than a threshold), a UE may monitor DCI for the corresponding G-RNTI corresponding to one or multiple SSBs of SSB#4,5,6,7. However, if SSB#4,5,6,7 < threshold (i.e., if a number of SSBs provided within a specific time window is less than a threshold), a UE may not monitor DCI for the corresponding G-RNTI. Here, the threshold can be configured separately by a base station as an SIB or an MCCH. If there is no separately configured threshold, a UE can use a threshold for serving cell measurement for the above purpose.

Additionally, when there are multiple time windows mapped to a specific G-RNTI, different time windows may provide group common transmission for different SSBs. For example, the same G-RNTI may be configured to be mapped to a time window of SFN (system frame number) = 5 and a time window of SFN = 10, group common transmission may be provided for SSB#4 and 5 in a time window of SFN=5, and group common transmission may be provided for SSB#6 and 7 in a time window of SFN=10. In this case, a UE may select one time window according to its best SSB to receive group common transmission.

Additionally, at the $[x \times N+K]$-th PDCCH monitoring occasion(s) within a specific time window, a base station may configure all SSBs configure with SIB1, however may actually configure to transmit a PDCCH only for specific SSB(s). Here, the time window may be configured by a base station or may be a pre-fixed value. For example, the time window may be configured to be mapped to a specific CFR, a specific G-RNTI, a specific G-RNTI group, a specific search space, or a specific search space group.

For example, a base station may transmit group common DCI (i.e., group common PDCCH) and group common PDSCH transmission only for specific SSB(s) for PDCCH monitoring occasion(s) for all N SSBs. In this case, a UE may perform PDCCH monitoring for a specific SSB according to a threshold, and receive group common PDSCH transmission scheduled by the DCI only when group common DCI (i.e., group common PDCCH) is received in the specific SSB.

Here, a base station may inform a terminal of information on SSB index(s) for a PDCCH that is not transmitted or SSB index(s) for a PDCCH that is transmitted. For example, an SSB index used for actual transmission or an SSB index not used for actual transmission for each G-RNTI or each service or each CFR or each window, each SFN area (each cell group) can be configured through a MCCH or a MAC CE. If a specific SSB index is not used for transmission and a TRS mapped to that is configured, a terminal may not monitor a MO mapped to the SSB or a MO mapped to the TRS. Alternatively, among a plurality of TRSs corresponding to a specific SSB index, some TRSs can be configured to be used for transmission and other TRSs can be configured not to be used for transmission. In this case, a terminal may only monitor an MO mapped to a TRS used for transmission and may not monitor an MO mapped to a TRS not used for transmissions. This information may be updated in the next MCCH cycle.

Alternatively, a base station transmits group common DCI (i.e., group common PDCCH) for all SSBs for PDCCH monitoring occasion(s) for all N SSBs, however can transmit a group common PDSCH only for specific SSBs.

Here, a base station may inform a UE that DCI for an SSB in which a group common PDSCH is not transmitted is not to transmit a PDSCH. Alternatively, a base station may indicate that the DCI for an SSB in which a group common PDSCH is not transmitted is to transmit a group common PDSCH to another SSB. Here, the DCI may indicate a TCI state for another SSB.

In this case, when a UE performs PDCCH monitoring for a specific SSB according to a threshold and receiving a group common DCI (i.e., group common PDCCH) on a specific SSB, the UE can receive the corresponding PDSCH when group common PDSCH transmission scheduled by DCI is connected to a specific SSB. However, if a group common PDSCH transmission scheduled by DCI is not connected to a specific SSB, a UE can receive the PDSCH only if a measurement value of an SSB connected to the PDSCH is greater than a threshold.

In this method, a base station can transmit or not transmit group common DCI (i.e., group common PDCCH) or group common PDSCH transmission for the same or different SSB(s) for different time windows.

For example, a base station can configure a modification period to 5 seconds and configure 100 time windows within 5 seconds. Additionally, a base station can configure to map 10 G-RNTI groups or 10 G-RNTIs to 100 time windows. This mapping between a G-RNTI and a window can be configured to repeat identically every modification period. Here, a base station may perform group common DCI (i.e., group common PDCCH) or group common PDSCH transmission only for $N\_k$ SSBs among all SSBs in one or multiple time windows (mapped) for the k-th G-RNTI group or k-th G-RNTI. Here, a plurality of time windows may be repeated according to a period of $P\_k$ (e.g., 160ms). Here, $N\_k$ is equal to or smaller than a total number of SSBs in a cell.

The same or different $N\_k$ values and/or $P\_k$ values may be configured for different k values. In other words, a number of actual transmitted SSBs in a time window and/or a period of a time window may be configured individually (differently) for each G-RNTI group or G-RNTI. Additionally, $N\_k$ value and/or $P\_k$ value may change every modification period. A base station may configure the same or different $N\_k$ value and/or $P\_k$ value for each G-RNTI group, G-RNTI, CFR, or time window every modification period. These $N\_k$ values and $P\_k$ values can be transmitted to a UE through an MCCH once or multiple times every modification period.

If the time window is an MTCH window for multicast traffic channel (MTCH) data transmission, a UE can monitor a PDCCH monitoring occasion according to a time window configuration as follows.

i) Method 1: Method in which a specific MTCH window or one or multiple SSB indexes or one or multiple MOs within a specific MTCH window are mapped to one or multiple G-RNTIs

A base station can be configured to map one MTCH window to one or multiple G-RNTIs through higher layer signaling (e.g., RRC signaling or MAC CE). A terminal that wants to receive group common transmission for a specific G-RNTI can monitor a PDCCH (or DCI) through a MTCH window mapped to the corresponding G-RNTI.

A base station may configure a MTCH window and multiple G-RNTIs to be mapped according to specific formulas/rules. In this case, a terminal that wants to receive group common transmission for a certain G-RNTI can monitor a PDCCH (or DCI) by determining a MTCH window mapped to a corresponding G-RNTI according to the above formula/rule.

Alternatively, a base station can configure one or more SSB indexes or one or more MOs within a specific MTCH window to be mapped to one or more G-RNTIs. Accordingly, a terminal that wants to receive transmission for a certain G-RNTI can monitor a PDCCH through an MO for an SSB index mapped to a corresponding G-RNTI or an MO mapped to a corresponding G-RNTI.

ii) Method 2: Method in which there is no information configured by a base station for mapping a specific MTCH window to a specific G-RNTI

- Method 2-1: A UE may attempt to receive (monitor) a group common PDCCH (or DCI) for all G-RNTIs that the UE wants to receive during a PDCCH monitoring occasion of an MTCH window.
- Method 2-2: A UE may attempt to receive (monitor) a group common PDCCH (or DCI) for a G-RNTI according to discontinuous reception (DRX) for each G-RNTI during a PDCCH monitoring occasion of an MTCH window.

For this purpose, a base station can provide a UE with separate DRX configuration information for each G-RNTI or G-RNTI group, broadcast (or multicast), or all group common PDCCHs. Therefore, a UE may determine an on-duration period for a G-RNTI according to the DRX configuration of a specific G-RNTI that the UE wants to receive, and monitor a group common PDCCH (or DCI) for the corresponding G-RNTI during the determined on-duration. Here, an on-duration duration can be defined only within an MTCH window. Alternatively, an on-duration duration for a specific G-RNTI may be composed of a plurality of MTCH windows in which a specific G-RNTI can be scheduled. That is, a DRX on-duration length for broadcast reception can be configured as a multiple of a MTCH window length with a MTCH window length as a basic unit.

- Method 2-3: A UE may attempt to receive (monitor) a group common PDCCH (or DCI) for a specific G-RNTI according to a search space for each G-RNTI during a PDCCH monitoring occasion of an MTCH window.

For this purpose, a base station can provide a UE with separate search space configuration information for each G-RNTI or G-RNTI group, broadcast (or multicast), or all group common PDCCHs. Therefore, a UE may monitor a group common PDCCH (or DCI) for a G-RNTI according to the search space configuration of a specific G-RNTI the the UE wants to receive. Here, a search space for a G-RNTI can be defined only within an MTCH window.

- Method 2-4: A terminal may attempt to receive a specific G-RNTI according to one or multiple MOs for each G-RNTI during a PDCCH monitoring occasion of an MTCH window.
- Method 2-5: A terminal may attempt to receive a specific G-RNTI according to one or multiple SSB indexes for each G-RNTI during a PDCCH monitoring occasion of an MTCH window.

A terminal that wants to receive a specific G-RNTI may receive a corresponding G-RNTI if a measurement value of a corresponding SSB index is greater than a threshold, and otherwise may not receive a corresponding G-RNTI.

- Method 2-6: A terminal may attempt to receive a specific G-RNTI according to one or multiple TRSs for each G-RNTI during a PDCCH monitoring occasion of an MTCH window.

A terminal that wants to receive a specific G-RNTI may receive the G-RNTI if a measurement value of a corresponding TRS is equal to or greater than a threshold, and otherwise may not receive the G-RNTI.

iii) Method 3: A method in which a group common DCI received within an MTCH window schedules a group common PDSCH into or out of the MTCH window

- Method 3-1: DCI can schedule a group common PDSCH only in slots within an MTCH window.

Here, when k0 (i.e., offset from DCI reception time to PDSCH reception time, 'DL assignment-to-PDSCH offset') of group common DCI received by a UE within an MTCH window is outside the MTCH window, the UE may ignore the group common DCI and not receive the group common PDSCH indicated by the group common DCI.

When group common DCI indicates repetition of a group common PDSCH, some PDSCH repetitions may be outside an MTCH window. If some slots of slot-based PDSCH repetition are outside the MTCH window, a UE may not receive PDSCH repetitions that are outside the MTCH window (depending on configuration of a base station).

- Method 3-2: group common DCI can schedule a group common PDSCH of a slot outside an MTCH window.

Here, even if k0 of group common DCI received by a UE within an MTCH window is outside the MTCH window, the UE can receive the group common PDSCH indicated by the DCI beyond the MTCH window.

When group common DCI indicates repetition of a group common PDSCH, some PDSCH repetitions may be outside an MTCH window. If some slots of slot-based PDSCH repetition are outside the MTCH window, a UE can receive PDSCH repetitions that are outside the MTCH window (depending on configuration of a base station).

Here, since SSB mapping can occur only within an MTCH window, when k0 of group common DCI schedules a group common PDSCH outside an MTCH window, a UE can perform the following operations depending on whether the group common DCI indicates a TCI state.

If group common DCI indicates a TCI state, a UE can receive a group common PDSCH with the indicated TCI state. On the other hand, if DCI does not indicate a TCI state, a UE can receive a group common PDSCH with the same SSB as the group common DCI.

- Method 4: A method in which a specific search space or a specific search space group is mapped to one or multiple G-RNTIs

A base station can configure a specific search space or a specific search space group to be mapped to one or multiple G-RNTIs using higher layer signaling (e.g., RRC signaling or MAC CE). A UE that intends to receive transmission for a specific G-RNTI can monitor a group common PDCCH (or DCI) through a specific search space or specific search space group mapped to the G-RNTI.

A base station can configure a specific search space or a specific search space group along with a specific MTCH window to be mapped to a plurality of G-RNTIs. In this case, a UE that intends to receive transmission for a specific G-RNTI can monitor a group common PDCCH (or DCI) through a specific search space or a specific search space group in the MTCH window mapped to the corresponding G-RNTI.

Embodiment 3: A method for configuring a CFR for broadcast and multicast

A UE in an idle/idle mode (e.g., RRC_IDLE) or an inactive/inactive mode (e.g. RRC_INACTIVE) can receive a group common PDCCH/PDSCH for broadcast (or multicast) traffic/data/information/service, etc. through an initial BWP or a CFR associated with (or including) the initial BWP. That is, a UE in an idle mode or an inactive mode can receive traffic/data/information/service transmitted broadcast (or multicast) in a CFR through a group common PDCCH/PDSCH.

An idle mode and an inactive mode can be collectively referred to as a non-connected mode.

For example, if a CFR is configured to a bandwidth wider than an initial BWP, a UE may receive a bandwidth corresponding to the CFR only during a time interval when a service of interest is transmitted, and can only receive a bandwidth of an initial BWP during a time interval when the service of interest is not transmitted. Here, the bandwidth of the initial BWP may correspond to a bandwidth of CORESET0 configured by an MIB or a bandwidth of an initial BWP configured by SIB1.

If a terminal receiving broadcast (or multicast) in an idle or inactive mode (i.e., traffic/data/information/service transmitted by broadcast (or multicast) is being received through a group common PDCCH/PDSCH) transitions to a connected mode (e.g. RRC_CONNECTED) through an RRC setup or RRC resume procedure, the terminal configures the terminal's active BWP according to an RRC setup message or RRC resume message. Here, a terminal's active BWP may be configured to include a CFR for broadcast or a broadcast CFR may be configured to include a terminal's active BWP.

Meanwhile, a start point or end point of a CFR on a frequency may not match boundaries of an RBG, PRG, and RB bundle of an initial DL BWP or a terminal's active BWP (see FIG. 14).

If a frequency range of a CFR includes an initial DL BWP or a terminal's active DL BWP, and a CFR has a wider frequency range than an initial DL BWP or a UE's active DL BWP, when a UE switches from idle or inactive mode to connected mode, a RBG, PRG, and RB bundle part that overlap a CFR may be changed. Alternatively, if a UE switches a DL BWP for unicast, a RBG, PRG, and RB bundle part that overlap with a CFR may change during switching.

While a CFR and initial DL BWP are configured commonly for multiple UEs, a UE's active BWP is configured specifically for a specific UE, therefore a RBG, PRG, and RB bundle of a CFR and initial DL BWP must be commonly applied to all UEs.

1) If a UE that has configured a CFR is in an idle/inactive mode or activating initial DL BWP in a connected mode, and a frequency domain of a CFR includes an initial DL BWP,

- A UE in IDLE or INACTIVE can configure a RBG or PRG or RB bundle of a CFR for broadcast as follows.

Option 1A: When a start or end point of an initial DL BWP in a frequency does not match a RBG or PRG or RB bundle boundary of a CFR, a UE in IDLE or INACTIVE may not use a RBG or PRG or RB bundle of a CFR that overlaps a start or end point of an initial DL BWP for GC (group common)-PDCCH/GC-PDSCH transmission.
Option 1B: When a start or end point of an initial DL BWP in a frequency does not match a RBG or PRG or RB bundle boundary of a CFR, a UE in IDLE or INACTIVE may split a RBG or PRG or RB bundle of a CFR that overlaps a start or end point of an initial DL BWP around a start or end point of an initial DL BWP, and can separately index a RBG or PRG or RB bundle outside an initial DL BWP and use it for GC-PDCCH/GC-PDSCH transmission.
Option 1C: A UE in IDLE or INACTIVE may not expect cases where a start or end point of an initial DL BWP in a frequency does not match a RBG or PRG or RB bundle boundary of a CFR.

- A UE that has configured a RBG or PRG or RB bundle of a CFR according to one of the above options 1A, 1B, and 1C, can configure a RBG or PRG or RB bundle of a CFR for broadcast as follows, after switching to connected mode, or immediately after switching from an initial BWP to UE's active BWP. The following options can be applied both when a frequency range of a CFR includes a UE's active BWP or when a frequency range of a UE's active BWP includes a CFR.

Option A: After switching to a connected mode, immediately after switching from an initial BWP to a UE's active BWP, regardless of a UE's currently active DL BWP, the UE can configure a RBG or PRG or RB bundle of a CFR for broadcast based on an initial DL BWP, depending on the same option as the option (i.e. option 1A or option 1B or option 1C) applied immediately before.
Option B: After switching to a connected mode, immediately after switching from an initial BWP to a UE's active BWP, a UE may not expect cases where a start or end point of a UE's active DL BWP in a frequency does not match a RBG or PRG or RB bundle boundary of a CFR.

2) If a UE that has configured a CFR is in an idle/inactive mode or is activating an initial DL BWP in a connected mode, and a frequency range of an initial DL BWP includes a CFR,

Option 2A: A UE may split a RBG or PRG or RB bundle of an initial DL BWP that does not match a start or end point of a CFR, and separately index a RBG, PRG, or RB bundle outside a CFR and use it for PDCCH/PDSCH transmission for system information, paging, or RACH.
Option 2B: A UE may not use a RBG or PRG or RB bundle of an initial DL BWP that does not match a start or end point of a CFR to transmit a PDCCH/PDSCH for system information or paging or RACH.

- A UE that has configured a RBG or PRG or RB bundle of a CFR according to one of the above options (option 2A, option 2B) can configure a RBG or PRG or RB bundle of a CFR for broadcast as follows, after switching to a connected mode, or immediately after switching from an initial BWP to a UE's active BWP. The following options can be applied both when a frequency range of a CFR includes a UE's active BWP or when a frequency range of s UE's active BWP includes a CFR.

Option A: After switching to a connected mode, or immediately after switching from an initial BWP to a UE's active BWP, regardless of a UE's currently active DL BWP, a UE can configure a RBG or PRG or RB bundle of a CFR for broadcast based on an initial DL BWP, depending on the option such as the above option (i.e. option 2A or option 2B) applied immediately before.
Option B: After switching to a connected mode, immediately after switching from an initial BWP to a UE's active BWP, a UE may not expect cases where a start or end point of a UE's active DL BWP in a frequency does not match a RBG or PRG or RB bundle boundary of a CFR.

Meanwhile, in the case of a broadcast CFR or multicast CFR, if a CFR is included in a UE's active BWP, a unicast RBG/PRG for a UE's active BWP may overlap with a start/end of a CFR. In this case, for a symbol or slot for which a search space for GC (group common)-DCI is configured or a GC-PDSCH is scheduled, a UE assumes one of the following.

- Alt 1: A unicast RBG/PRG that overlaps a start/end of a CFR can be split into two parts and indexed separately for each part.
- Alt 2: Only RBs outside a CFR can be used for a unicast PDSCH for a unicast RBG/PRG overlapping a CFR boundary.

For symbols or slots for which a search space for GC-DCI is not configured or a GC-PDSCH is not scheduled, a UE may assume that an overlapping RBG/PRG in a UE's active BWP is not used for a unicast PDSCH without the Alt1 and Alt2.

FIG. 16 is a diagram illustrating a signaling procedure between a base station and a terminal for a group common PDSCH transmission and reception method according to an embodiment of the present disclosure.

FIG. 16 illustrates a signaling procedure between a user equipment (UE) and a base station (BS) based on the method proposed above (e.g., any one of Embodiment 1, Embodiment 2, Embodiment 3 and the detailed embodiments above, or a combination of more than one). The example of FIG. 16 is for convenience of description and does not limit the scope of the present disclosure. Some step(s) illustrated in FIG. 16 may be omitted depending on circumstances and/or settings. In addition, the base station and the UE in FIG. 16 are just one example and may be implemented as a device illustrated in FIG. 15 below. For example, the processor 102/202 of FIG. 19 may control to transmit and receive channels/signals/data/information, etc. using the transceiver 106/206 and to store transmitted or received channels/signals/data/information in the memory 104/204.

In addition, in an operation between a base station and a UE in FIG. 16, the above-described content can be referenced/used even if there is no separate mention.

A base station may be a general term for objects that transmit and receive data to and from a terminal. For example, the base station may be a concept including one or more transmission points (TPs), one or more transmission and reception points (TRPs), etc. In addition, a TP and/or a TRP may include a panel of a base station, a transmission and reception unit, etc. In addition, "TRP" may be substituted with an expression such as a panel, an antenna array, a cell (e.g., macro cell / small cell / pico cell, etc.), a TP (transmission point), a base station (base station, gNB, etc.) and applied. As described above, TRPs may be classified according to information (e.g., index, ID) on a CORESET group (or CORESET pool). For example, when one UE is configured to transmit and receive multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

Referring to FIG. 16, signaling between one base station and one UE is considered for convenience of description, but the corresponding signaling scheme may be extended and applied to signaling between multiple TRPs and multiple UEs. In the following description, a base station may be interpreted as one TRP. Alternatively, a base station may include a plurality of TRPs, or may be one cell including a plurality of TRPs.

Although not shown in FIG. 16, a UE may receive configuration information related a group common PDCCH and configuration information related to a group common PDSCH from a base station.

The configuration information related to the group common PDCCH and/or the configuration information related to the group common PDSCH may include information on a CFR for receiving a group common PDCCH and/or a group common PDSCH. One DL CFR may provide group common PDCCH and group common PDSCH transmission resources, and one UL CFR can provide HARQ-ACK PUCCH resources for group common PDSCH reception. One CFR may be one MBS specific BWP or one UE specific BWP. Alternatively, one or multiple CFRs may be configured in one UE specific BWP, and vice versa. One CFR is associated with one UE specific BWP.

Referring to FIG. 16, a UE receives N (N is a natural number) reference signals from a base station (S1601).

For example, the reference signal may be an SS/PBCH block (i.e., SSB block). Hereinafter, for convenience of explanation, the case where a reference signal is an SS/PBCH block will be mainly described, but the present disclosure is not limited to this.

Here, resource locations of a plurality of SS/PBCH block candidates may be determined according to SCS, and N SS/PBCH blocks that are actually transmitted can be configured by higher layer signaling (e.g., higher layer parameter ssb-PositionsInBurst). Regarding the transmission of N SS/PBCH blocks, the previous description according to FIGS. 11 and 12 may be referred to, and detailed description thereof will be omitted.

A UE receives one or more downlink SPS configurations for group common transmission (e.g., multicast and/or broadcast transmission) from a base station (S1602).

Here, the downlink SPS configuration may be transmitted through higher layer signaling (e.g., RRC signaling) and, for example, may correspond to one or more SPS-config included in SPS-ConfigMulticastToAdd Mod List.

The terminal receives M (M is a natural number) group common PDSCHs scheduled using one or more SPS configures from a base station (S1603).

Here, in order to assume a quasi co-location (QCL) relationship for receiving the M group common PDSCH according to Embodiment 2, different group common PDSCHs in the M group common PDSCHs may be mapped to different reference signals (e.g., SS/PBCH blocks) in the N reference signals (e.g., SS/PBCH blocks).

Additionally, the M group common PDSCHs may be scheduled using the same or different SPS configurations.

For example, when scheduled using the same SPS configuration, one SPS configuration used to schedule the M group common PDSCHs may be received. And, the M group common PDSCHs for one TB transmission within one SPS period can be scheduled using the one SPS configuration. Here, in the M group common PDSCHs, the k-th ($1 \le k \le N$, k is a natural number) group common PDSCH in units of N group common PDSCHs may be mapped to the k-th reference signal (e.g., SS/PBCH block).

As another example, or when scheduling is performed using different SPS settings, a plurality of SPS configurations used to schedule the M group common PDSCHs may be received. In addition, different SPS configurations in the plurality of SPS may be mapped to different reference signals (e.g., SS/PBCH blocks) among the N reference signals (e.g., SS/PBCH blocks).

As another example, based on a plurality of G-CS-RNTIs being configured, the k-th ($1 \le k \le N$, k is a natural number) G-CS-RNTI is the k-th reference signal (e.g., SS/ PBCH block). In this case, a group common PDSCH activated by DCI (i.e. DCI with attached a CRC scrambled by the k-th G-CS-RNTI) with the k-th G-CS-RNTI may have a QCL relationship configured with the k-th reference signal (e.g., SS/PBCH block).

Meanwhile, although not shown in FIG. 16, a UE may receive individual active DCI that activate the M group common PDSCHs from a base station.

In this case, according to Embodiment 1 above, a plurality of PDCCH monitoring occasions (MO) within one MTCH window or one MTCH group may be configured. Also, a specific MO among the plurality of MOs may be mapped to a specific SS/PBCH block among the N SS/PBCH blocks.

For example, among the M group common PDSCHs, a group common PDSCH activated by activation DCI transmitted from the specific MO may be mapped to the specific SS/PBCH block.

As another example, when different MOs among the plurality of MOs are mapped to the same SS/PBCH block, based on at least one of the Hybrid Automatic Repeat and request (HARQ) process number, new data indicator (NDI), and group-RNTI (G-RNTI) for DCI transmitted from the different MOs, whether the same transport block (TB) is transmitted can be determined depending on the DCI transmitted in the different MOs. Alternatevely, when different MOs among the plurality of MOs are mapped to the same SS/PBCH block, regardless of the HARQ process number and NDI of DCI transmitted in the different MOs, different TBs may be transmitted depending on the DCI transmitted from the different MOs.

In addition, according to Embodiment 3 above, the M group common PDSCHs may be transmitted in a CFR, and in this case, a CFR may be configured according to Embodiment 3 above.

In addition, although not shown, according to the operations previously illustrated in FIG. 13, a UE may transmit HARQ-ACK information to a base station based on the decoding result of data carried in a group common PDSCH.

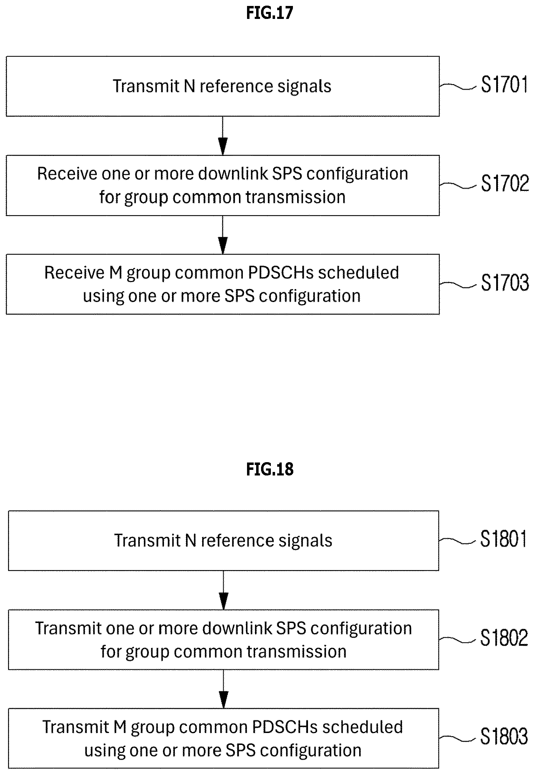

FIG. 17 is a diagram illustrating an operation of a terminal for a group common PDSCH transmission and reception method according to an embodiment of the present disclosure.

FIG. 17 illustrates an operation of a UE based on the method proposed above (e.g., any one of Embodiment 1, Embodiment 2, Embodiment 3 and the detailed embodiments above, or a combination of more than one). The example of FIG. 17 is for convenience of description and does not limit the scope of the present disclosure. Some step(s) illustrated in FIG. 17 may be omitted depending on circumstances and/or settings. In addition, the UE in FIG. 17 is just one example and may be implemented as a device illustrated in FIG. 19 below. For example, the processor 102/202 of FIG. 17 may control to transmit and receive channels/signals/data/information, etc. using the transceiver 106/206 and to store transmitted or received channels/signals/data/information in the memory 104/204.

Referring to FIG. 17, a UE receives N (N is a natural number) reference signals from a base station (S1701).

For example, the reference signal may be an SS/PBCH block (i.e., SSB block). Hereinafter, for convenience of explanation, the case where a reference signal is an SS/PBCH block will be mainly described, but the present disclosure is not limited to this.

Here, resource locations of a plurality of SS/PBCH block candidates may be determined according to SCS, and N SS/PBCH blocks that are actually transmitted can be configured by higher layer signaling (e.g., higher layer parameter ssb-PositionsInBurst). Regarding the transmission of N SS/PBCH blocks, the previous description according to FIGS. 11 and 12 may be referred to, and detailed description thereof will be omitted.

A UE receives one or more downlink SPS configurations for group common transmission (e.g., multicast and/or broadcast transmission) from a base station (S1702).

Here, the downlink SPS configuration may be transmitted through higher layer signaling (e.g., RRC signaling) and, for example, may correspond to one or more SPS-config included in SPS-ConfigMulticastToAdd Mod List.

A UE receives M (M is a natural number) group common PDSCHs scheduled using one or more SPS configures from a base station (S1703).

Here, in order to assume a quasi co-location (QCL) relationship for receiving the M group common PDSCH according to Embodiment 2, different group common PDSCHs in the M group common PDSCHs may be mapped to different reference signals (e.g., SS/PBCH blocks) in the N reference signals (e.g., SS/PBCH blocks).

Additionally, the M group common PDSCHs may be scheduled using the same or different SPS configurations.

For example, when scheduled using the same SPS configuration, one SPS configuration used to schedule the M group common PDSCHs may be received. And, the M group common PDSCHs for one TB transmission within one SPS period can be scheduled using the one SPS configuration. Here, in the M group common PDSCHs, the k-th ($1 \leq k \leq N$, k is a natural number) group common PDSCH in units of N group common PDSCHs may be mapped to the k-th reference signal (e.g., SS/PBCH block).

As another example, or when scheduling is performed using different SPS settings, a plurality of SPS configurations used to schedule the M group common PDSCHs may be received. In addition, different SPS configurations in the plurality of SPS may be mapped to different reference signals (e.g., SS/PBCH blocks) among the N reference signals (e.g., SS/PBCH blocks).

As another example, based on a plurality of G-CS-RNTIs being configured, the k-th ($1 \leq k \leq N$, k is a natural number) G-CS-RNTI is the k-th reference signal (e.g., SS/ PBCH block). In this case, a group common PDSCH activated by DCI (i.e. DCI with attached a CRC scrambled by the k-th G-CS-RNTI) with the k-th G-CS-RNTI may have a QCL relationship configured with the k-th reference signal (e.g., SS/PBCH block).

Meanwhile, although not shown in FIG. 17, a UE may receive individual active DCI that activate the M group common PDSCHs from a base station.

In this case, according to Embodiment 1 above, a plurality of PDCCH monitoring occasions (MO) within one MTCH window or one MTCH group may be configured. Also, a specific MO among the plurality of MOs may be mapped to a specific SS/PBCH block among the N SS/PBCH blocks.

For example, among the M group common PDSCHs, a group common PDSCH activated by activation DCI transmitted from the specific MO may be mapped to the specific SS/PBCH block.

As another example, when different MOs among the plurality of MOs are mapped to the same SS/PBCH block, based on at least one of the Hybrid Automatic Repeat and request (HARQ) process number, new data indicator (NDI), and group-RNTI (G-RNTI) for DCI transmitted from the different MOs, whether the same transport block (TB) is transmitted can be determined depending on the DCI transmitted in the different MOs. Alternatevely, when different MOs among the plurality of MOs are mapped to the same SS/PBCH block, regardless of the HARQ process number and NDI of DCI transmitted in the different MOs, different TBs may be transmitted depending on the DCI transmitted from the different MOs.

In addition, according to Embodiment 3 above, the M group common PDSCHs may be transmitted in a CFR, and in this case, a CFR may be configured according to Embodiment 3 above.

In addition, although not shown, according to the operations previously illustrated in FIG. 13, a UE may transmit HARQ-ACK information to a base station based on the decoding result of data carried in a group common PDSCH.

FIG. 18 is a diagram illustrating an operation of a base station for a group common PDSCH transmission and reception method according to an embodiment of the present disclosure.

FIG. 18 illustrates an operation of a base station based on the method proposed above (e.g., any one of Embodiment 1, Embodiment 2, Embodiment 3 and the detailed embodiments above, or a combination of more than one). The example of FIG. 18 is for convenience of description and does not limit the scope of the present disclosure. Some step(s) illustrated in FIG. 18 may be omitted depending on circumstances and/or settings. In addition, the base station in FIG. 18 is just one example and may be implemented as a device illustrated in FIG. 19 below. For example, the processor 102/202 of FIG. 19 may control to transmit and receive channels/signals/data/information, etc. using the transceiver 106/206 and to store transmitted or received channels/signals/data/information in the memory 104/204.

Referring to FIG. 18, a base station transmits N (N is a natural number) reference signals to a UE (S1801).

For example, the reference signal may be an SS/PBCH block (i.e., SSB block). Hereinafter, for convenience of explanation, the case where a reference signal is an SS/PBCH block will be mainly described, but the present disclosure is not limited to this.

Here, resource locations of a plurality of SS/PBCH block candidates may be determined according to SCS, and N SS/PBCH blocks that are actually transmitted can be configured by higher layer signaling (e.g., higher layer parameter ssb-PositionsInBurst). Regarding the transmission of N SS/PBCH blocks, the previous description according to FIGS. 11 and 12 may be referred to, and detailed description thereof will be omitted.

A base station transmits one or more downlink SPS configurations for group common transmission (e.g., multicast and/or broadcast transmission) to a UE (S1802).

Here, the downlink SPS configuration may be transmitted through higher layer signaling (e.g., RRC signaling) and, for example, may correspond to one or more SPS-config included in SPS-ConfigMulticastToAddModList.

A base station transmits M (M is a natural number) group common PDSCHs scheduled using one or more SPS configures to a UE (S1803).

Here, in order to assume a quasi co-location (QCL) relationship for receiving the M group common PDSCH according to Embodiment 2, different group common PDSCHs in the M group common PDSCHs may be mapped to different reference signals (e.g., SS/PBCH blocks) in the N reference signals (e.g., SS/PBCH blocks).

Additionally, the M group common PDSCHs may be scheduled using the same or different SPS configurations.

For example, when scheduled using the same SPS configuration, one SPS configuration used to schedule the M group common PDSCHs may be received. And, the M group common PDSCHs for one TB transmission within one SPS period can be scheduled using the one SPS configuration. Here, in the M group common PDSCHs, the k-th ($1 \leq k \leq N$, k is a natural number) group common PDSCH in units of N group common PDSCHs may be mapped to the k-th reference signal (e.g., SS/PBCH block).

As another example, or when scheduling is performed using different SPS settings, a plurality of SPS configurations used to schedule the M group common PDSCHs may be received. In addition, different SPS configurations in the plurality of SPS may be mapped to different reference signals (e.g., SS/PBCH blocks) among the N reference signals (e.g., SS/PBCH blocks).

As another example, based on a plurality of G-CS-RNTIs being configured, the k-th ($1 \leq k \leq N$, k is a natural number) G-CS-RNTI is the k-th reference signal (e.g., SS/ PBCH block). In this case, a group common PDSCH activated by DCI (i.e. DCI with attached a CRC scrambled by the k-th G-CS-RNTI) with the k-th G-CS-RNTI may have a QCL relationship configured with the k-th reference signal (e.g., SS/PBCH block).

Meanwhile, although not shown in FIG. 18, a base station may transmit individual active DCI that activate the M group common PDSCHs to a UE.

In this case, according to Embodiment 1 above, a plurality of PDCCH monitoring occasions (MO) within one MTCH window or one MTCH group may be configured. Also, a specific MO among the plurality of MOs may be mapped to a specific SS/PBCH block among the N SS/PBCH blocks.

For example, among the M group common PDSCHs, a group common PDSCH activated by activation DCI transmitted from the specific MO may be mapped to the specific SS/PBCH block.

As another example, when different MOs among the plurality of MOs are mapped to the same SS/PBCH block, based on at least one of the Hybrid Automatic Repeat and request (HARQ) process number, new data indicator (NDI), and group-RNTI (G-RNTI) for DCI transmitted from the different MOs, whether the same transport block (TB) is transmitted can be determined depending on the DCI transmitted in the different MOs. Alternatevely, when different MOs among the plurality of MOs are mapped to the same SS/PBCH block, regardless of the HARQ process number and NDI of DCI transmitted in the different MOs, different TBs may be transmitted depending on the DCI transmitted from the different MOs.

In addition, according to Embodiment 3 above, the M group common PDSCHs may be transmitted in a CFR, and in this case, a CFR may be configured according to Embodiment 3 above.

In addition, although not shown, according to the operations previously illustrated in FIG. 13, a base station may receive HARQ-ACK information from a UE based on the decoding result of data carried in a group common PDSCH.

General Device to which the Present Disclosure may be applied

FIG. 19 is a diagram which illustrates a block diagram of a wireless communication device according to an embodiment of the present disclosure.

In reference to FIG. 19, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of receiving a group common PDSCH (physical downlink shared channel) in a wireless communication system, the method performed by a terminal comprising:

    receiving, from a base station, N (N is a natural number) reference signals;
    receiving, from the base station, one or more downlink semi-persistent scheduling (SPS) configurations for group common transmission; and
    receiving, from the base station, M (M is a natural number) group common PDSCHs scheduled using the one or more SPS configurations,
    wherein for assuming a quasi co-location (QCL) relationship for receiving the M group common PDSCHs, different group common PDSCHs in the M group common PDSCHs are mapped to different reference signals in the N reference signals.

2. The method of claim 1, wherein the M group common PDSCHs are scheduled using the same or different SPS configurations.

3. The method of claim 2, wherein one SPS configuration used to schedule the M group common PDSCHs is received, and
    wherein the M group common PDSCHs are scheduled for transmission of one transport block (TB) within one SPS period using the one SPS configuration.

4. The method of claim 3, wherein in the M group common PDSCHs, the k-th (1≤k≤N, k is a natural number) group common PDSCH in units of N group common PDSCHs is mapped to the k-th reference signal.

5. The method of claim 2, wherein a plurality of SPS configurations used for scheduling the M group common PDSCHs are received, and
    wherein different SPS configurations in the plurality of SPS are mapped to different reference signals among the N reference signals.

6. The method of claim 1, wherein based on a plurality of G-CS-RNTIs (group-configured grant-radio network temporary identity) being configured, the k-th (1≤k≤N, k is a natural number) G-CS-RNTI is mapped to the kth reference signal, and
    wherein a group common PDSCH activated by downlink control information (DCI) having the k-th G-CS-RNTI is configured to have a QCL relationship with the k-th reference signal.

7. The method of claim 1, wherein one MTCH (multicast traffic channel) window or a plurality of PDCCH (physical downlink control channel) monitoring occasions (MO: monitoring occasions) within one MTCH group are configured,

    wherein the reference signal is a synchronization signal/physical broadcast channel (SS/PBCH) block, and
    wherein a specific MO among the plurality of MOs is mapped to a specific SS/PBCH block among the N SS/PBCH blocks.

8. The method of claim 7, wherein among the M group common PDSCHs, a group common PDSCH activated by an activation DCI transmitted in the specific MO is mapped to the specific SS/PBCH block.

9. The method of claim 7, wherein when different MOs among the plurality of MOs are mapped to the same SS/PBCH block, whether the same transport block (TB) is transmitted is determined depending on DCI transmitted in the different MOs based on at least one of a HARQ (Hybrid Automatic Repeat and request) process number, a new data indicator (NDI), and a group-RNTI (G-RNTI) for DCI transmitted from the different MOs.

10. The method of claim 7, wherein when different MOs among the plurality of MOs are mapped to the same SS/PBCH block, regardless of a HARQ process number and an NDI of DCI transmitted in the different MOs, different TBs are transmitted by DCI transmitted from the different MOs.

11. A terminal of receiving a group common PDSCH (physical downlink shared channel) in a wireless communication system, the terminal comprising:

at least one transceiver for transmitting and receiving a wireless signal; and
at least one processor for controlling the at least one transceiver,
wherein the at least one processor configured to:

receive, from a base station, N (N is a natural number) reference signals;
receive, from the base station, one or more downlink semi-persistent scheduling (SPS) configurations for group common transmission; and
receive, from the base station, M (M is a natural number) group common PDSCHs scheduled using the one or more SPS configurations,
wherein for assuming a quasi co-location (QCL) relationship for receiving the M group common PDSCHs, different group common PDSCHs in the M group common PDSCHs are mapped to different reference signals in the N reference signals.

12. At least one non-transitory computer-readable medium storing at least one instruction, wherein the at least one instruction executable by at least one processor controls a device of receiving a group common PDSCH (physical downlink shared channel) to:

receive, from a base station, N (N is a natural number) reference signals;
receive, from the base station, one or more downlink semi-persistent scheduling (SPS) configurations for group common transmission; and
receive, from the base station, M (M is a natural number) group common PDSCHs scheduled using the one or more SPS configurations,
wherein for assuming a quasi co-location (QCL) relationship for receiving the M group common PDSCHs, different group common PDSCHs in the M group common PDSCHs are mapped to different reference signals in the N reference signals.

13. A processing apparatus configured to control a terminal of receiving a group common PDSCH (physical downlink shared channel) in a wireless communication system, the processing apparatus comprising:

at least one processor; and
at least one computer memory operably connected to the at least one processor and storing instructions that, based on being executed by the at least one processor, perform operations comprising:

receiving, from a base station, N (N is a natural number) reference signals;
receiving, from the base station, one or more downlink semi-persistent scheduling (SPS) configurations for group common transmission; and
receiving, from the base station, M (M is a natural number) group common PDSCHs scheduled using the one or more SPS configurations,
wherein for assuming a quasi co-location (QCL) relationship for receiving the M group common PDSCHs, different group common PDSCHs in the M group common PDSCHs are mapped to different reference signals in the N reference signals.

14. A method of transmitting a group common PDSCH (physical downlink shared channel) in a wireless communication system, the method performed by a base station comprising:

transmitting, to a terminal, N (N is a natural number) reference signals;
transmitting, to the terminal, one or more downlink semi-persistent scheduling (SPS) configurations for group common transmission; and
transmitting, to the terminal, M (M is a natural number) group common PDSCHs scheduled using the one or more SPS configurations,
wherein for assuming a quasi co-location (QCL) relationship for receiving the M group common PDSCHs, different group common PDSCHs in the M group common PDSCHs are mapped to different reference signals in the N reference signals.

15. A base station of transmitting a group common PDSCH (physical downlink shared channel) in a wireless communication system, the terminal comprising:

at least one transceiver for transmitting and receiving a wireless signal; and

at least one processor for controlling the at least one transceiver,
wherein the at least one processor configured to:

transmit, to a terminal, N (N is a natural number) reference signals;

transmit, to the terminal, one or more downlink semi-persistent scheduling (SPS) configurations for group common transmission; and

transmit, to the terminal, M (M is a natural number) group common PDSCHs scheduled using the one or more SPS configurations,

wherein for assuming a quasi co-location (QCL) relationship for receiving the M group common PDSCHs, different group common PDSCHs in the M group common PDSCHs are mapped to different reference signals in the N reference signals.

**FIG.1**

**FIG.2**

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

**FIG.3**

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

48

**FIG.4**

**FIG.5**

Resource grid

**FIG.6**

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601    S602    S603    S604    S605    S606    S607    S608

· DL/UL ACK/NACK
· UE CQI/PMI RI REPORT
  USING PUSCH AND PUCCH

**FIG.7**

*Number*

**FIG.8**

SSB periodicity (default : 20ms)

5ms
window

| SSB#1 | SSB#2 | · · · | SSB#L |

SSB burst set

**FIG.9**

SFN                        SSB time index

| s9, s8, s7, s6, s5, s4, s3, s2, s1, s0 | c0 | b5, b4, b3 | b2, b1, b0 |

Half frame boundary

PBCH payload                  DMRS

**FIG.10**

| UE | | Cell(e.g., BS) |

*MasterInformationBlock*

*SystemInformationBlockType1*

*System Information Request*

*System Information messages*

**FIG.11**

**FIG.12**

| Bitmap in Group (8bits) | SSB#0 | SSB#1 | SSB#2 | SSB#3 | SSB#4 | SSB#5 | SSB#6 | SSB#7 |
|---|---|---|---|---|---|---|---|---|

| Group - Bitmap (8bits) | Group#0 | Group#1 | Group#2 | Group#3 | Group#4 | Group#5 | Group#6 | Group#7 |
|---|---|---|---|---|---|---|---|---|

**FIG.13**

(a)                                                    (b)

EP 4 432 746 A1

# FIG.14

CRB index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 30 | ...

CFR

PRB index of active DL BWP of UE 1 | 0 | 1 | 2 | 3 | 4 | 5 | 6 | 7 | 8 | 9 | 10 | 11 | 12 | 13 | 14 | 15 | 16 | 17 | 18 | 19 | 20

PRB bundle #0 or RBG #0    PRB bundle #1 or RBG #1    PRB bundle #2 or RBG #2    PRB bundle #3 or RBG #3    PRB bundle #4 or RBG #4    PRB bundle #5 or RBG #5

PRB index of active DL BWP of UE 2 | 0 | 1 | 2 | 3 | 4 | 5 | 6 | 7 | 8 | 9 | 10 | 11 | 12 | 13 | 14 | 15 | 16 | 17 | 18 | 19 | 20

PRB bundle #0 or RBG #0    PRB bundle #1 or RBG #1    PRB bundle #2 or RBG #2    PRB bundle #3 or RBG #3    PRB bundle #4 or RBG #4    PRB bundle #5 or RBG #5

**FIG.15**

G-RNTI DCI

Group
Common
PDSCH ~1001

HARQ-ACK ~1002

G-RNTI DCI

Group
Common
PDSCH ~1003

HARQ-ACK ~1004

frequency

time

**FIG.16**

Terminal                                    Base station

N reference signals                    S1601

One or more downlink SPS configuration
for group common transmission          S1602

M group common PDSCHs scheduled
using one or more SPS configuration    S1603

**FIG.17**

| | |
|---|---|
| Transmit N reference signals | S1701 |
| Receive one or more downlink SPS configuration for group common transmission | S1702 |
| Receive M group common PDSCHs scheduled using one or more SPS configuration | S1703 |

**FIG.18**

| | |
|---|---|
| Transmit N reference signals | S1801 |
| Transmit one or more downlink SPS configuration for group common transmission | S1802 |
| Transmit M group common PDSCHs scheduled using one or more SPS configuration | S1803 |

FIG.19

EP 4 432 746 A1

<div align="center">

**INTERNATIONAL SEARCH REPORT**

</div>

| | |
|---|---|
| International application No. | |
| | **PCT/KR2022/017836** |

**A. CLASSIFICATION OF SUBJECT MATTER**

**H04W 72/00**(2009.01)i; **H04W 72/04**(2009.01)i; **H04W 72/12**(2009.01)i; **H04L 1/18**(2006.01)i

According to International Patent Classification (IPC) or to both national classification and IPC

**B. FIELDS SEARCHED**

Minimum documentation searched (classification system followed by classification symbols)

H04W 72/00(2009.01); H04L 1/18(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: group common PDSCH, SPS configuration, QCL, G-CS-RNTI

**C. DOCUMENTS CONSIDERED TO BE RELEVANT**

| Category* | Citation of document, with indication, where appropriate, of the relevant passages | Relevant to claim No. |
|---|---|---|
| A | ERICSSON. Mechanisms to support MBS group scheduling for RRC_CONNECTED UEs. R1-2108170, 3GPP TSG-RAN WG1 Meeting #106-e, e-Meeting. 06 August 2021. <br> See sections 2.3.1-2.3.3. | 1-15 |
| A | WO 2021-066631 A1 (LG ELECTRONICS INC.) 08 April 2021 (2021-04-08) <br> See paragraphs [0149] and [0301]; and claim 1. | 1-15 |
| A | ZTE. Discussion on mechanisms to Support Group Scheduling for RRC_CONNECTED UEs. R1-2110910, 3GPP TSG RAN WG1 #107-e, e-Meeting. 06 November 2021. <br> See sections 2-5. | 1-15 |
| A | XIAOMI. Discussion on mechanisms to improve reliability for RRC_CONNECTED UEs. R1-2111550, 3GPP TSG RAN WG1 #107-e, e-Meeting. 05 November 2021. <br> See sections 2-3. | 1-15 |
| A | SAMSUNG. Introduction of multicast-broadcast services in NR. R1-2112445, 3GPP TSG RAN WG1 #107-e, e-Meeting. 10 November 2021. <br> See section 18. | 1-15 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 February 2023** | **28 February 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/017836**

| Patent document cited in search report | Publication date (day/month/year) | Patent family member(s) | Publication date (day/month/year) |
|---|---|---|---|
| WO 2021-066631 A1 | 08 April 2021 | US 2022-0393829 A1 | 08 December 2022 |

Form PCT/ISA/210 (patent family annex) (July 2022)